# EUROPÄISCHE PATENTSCHRIFT

(11) **EP 0 544 674 B1**
(45) Veröffentlichungstag und Bekanntmachung des Hinweises auf die Patenterteilung: **01.03.1995**
(21) Anmeldenummer: 91908689.2
(22) Anmeldetag: 25.04.1991
(51) Int. Cl.: C08G 77/12, C08G 77/18, C08L 83/05

(54) **ORGANO(POLY)SILOXANE MIT ORGANYLOXY- UND HYDROGENGRUPPEN AUFWEISENDEN, ENDSTÄNDIGEN SILOXANEINHEITEN**
ORGANO(POLY)SILOXANES WITH SILOXANE UNITS AT THE END OF THE CHAIN HAVING ORGANYLOXY AND HYDROGEN GROUPS
ORGANO(POLY)SILOXANES A UNITES SILOXANES EN FIN DE CHAINE AYANT DES GROUPES ORGANYLOXYLES ET HYDROGENES

(30) Priorität: 26.04.1990 DE 4013281; 17.09.1990 DE 4029481; 09.08.1990 DE 4025281
(43) Veröffentlichungstag der Anmeldung: 09.06.1993
(73) Patentinhaber: WACKER-CHEMIE GMBH, D-81737 München (DE)
(72) Erfinder: STAIGER, Gerhard, D-8262 Altötting (DE); BRAUN, Rudolf, D-8261 Kastl (DE); MÜLLER, Johann, D-8263 Burghausen (DE); STEPP, Michael, D-8263 Burghausen (DE); BRENNENSTUHL, Werner, D-8269 Burgkirchen (DE); ABSMAIER, Petra, D-8261 Emmerting (DE)
(86) Internationale Anmeldenummer: EP9100795
(87) Internationale Veröffentlichungsnummer: WO9116371

(56) Entgegenhaltungen:
- EP-A- 0 022 976
- BE-A- 538 964
- US-A- 3 338 868
- US-A- 4 489 191
- US-A- 4 900 362
- Chemical Abstracts, vol.84, No.6, 09.02.1976, page 63, abstract no.32341n,(Columbus, Ohio,US)
- Patents Abstracts of Japan, vol.4, No.69, (C-11)(551), 22.05.1980, & JP-A-55036268

## Beschreibung

Die Erfindung betrifft Organo(poly)siloxane mit Organyloxy- und Hydrogengruppen aufweisenden, endständigen Siloxaneinheiten, verfahren zu deren Herstellung und deren Verwendung in Organo(poly)siloxanmassen, die unter Ausschluß von Wasser lagerfähig sind, bei Zutritt von Wasser jedoch schon bei Raumtemperatur unter Abspaltung von Alkoholen zu Elastomeren verneint werden können. sowie in Verfahren zur Herstellung von Organopolysiloxanelastomeren durch Vernetzung von durch Anlagerung von Si-gebundenem Wasserstoff an SiC-gebundene Reste mit aliphatischer Kohlenstoff-Kohlenstoff-Mehrfachbindung vernetzbaren Massen.

In US-PS 4,755,578 (G.M. Lucas, General Electric Company; ausgegeben am 5. Juli 1988) sind Diorganopolysiloxane mit Organyloxygruppen aufweisenden, endständigen Siloxaneinheiten enthaltende Massen beschrieben, die unter Ausschluß von Wasser lagerfähig sind und bei Zutritt von Feuchtigkeit unter Abspaltung von Alkohol zu Elastomeren vernetzt werden können. Diese Massen enthalten zur Beschleunigung der Vernetzungsgeschwindigkeit einen Metallkatalysator, insbesondere Zinnverbindungen, wodurch die Lagerstabilität dieser Massen jedoch erheblich beeinträchtigt wird.

In W. Noll, "Chemie und Technologie der Silicone" (1968), Kap. 8.1.2.3 werden Mehrkomponentensysteme beschrieben, bei denen α,ω-Dihydroxydimethylpolysiloxan mit Alkyltrialkoxysilan als Vernetzer und Katalysator vernetzen gelassen wird. Des weiteren wird in DE-PS 10 81 663 ein Verfahren zur Herstellung von Elastomeren beschrieben, bei der als Hauptkomponente ein α,ω-Dihydroxydimethylpolysiloxan, als Katalysator eine Zinnverbindung und ein Monomethyldialkoxysilan sowie gegebenenfalls ein Orthokieselsäureester verwendet wird.

Aus EP 0 203 753 A3 sind additionsvernetzende Organopolysiloxanmassen bekannt, die ein alkenylgruppenhaltiges Organopolysiloxan (a), ein Polyorganohydrogensiloxan (b), einen Platinkatalysator und ein Polyorganohydrogensiloxan (c) mit einer harzartigen Struktur aufweisen.

In DE-OS 38 01 389 (Wacker-Chemie GmbH; ausgegeben am 27. Juli 1989) bzw. der entsprechenden US-Anmeldung mit der Seriennummer U.S.S.N. 29 3909 (angemeldet am 6. Januar 1989) werden unter Abspaltung von Alkoholen zu Elastomeren vernetzbare Organopolysiloxanmassen beschrieben, die durch Salze der 2. Haupt- und Nebengruppe mit verzweigtkettigen Carbonsäuren stabilisiert sind. Solche Massen weisen jedoch im allgemeinen eine sehr geringe Vernetzungsgeschwindigkeit auf, so daß zur Beschleunigung Metallverbindungen, wie beispielsweise Zinnverbindungen, als Kondensationskatalysator zugesetzt werden müssen. Dadurch wird jedoch häufig die Lagerstabilität beeinträchtigt, so daß solche Massen nach längerer Lagerung nicht mehr oder nur noch sehr langsam aushärten.

Verfahren zur Herstellung von Organopolysiloxanelastomeren durch Vernetzung von durch Anlagerung von Si-gebundenem Wasserstoff an SiC-gebundene Reste mit aliphatischer Kohlenstoff-Kohlenstoff-Mehrfachbindung vernetzbaren Massen, wobei die Anlagerung im allgemeinen in Anwesenheit eines Katalysators erfolgt, sind vielfach bekannt. Die elastomerbildenden Massen haften auf einer Reihe von Substraten jedoch meist sehr schlecht, so daß schon zahlreiche Versuche unternommen wurden, die Haftung zu verbessern. Hierzu wurden beispielsweise die entsprechenden Substrate vor Aufbringen dieser elastomerbildenden Massen mit einem Grundiermittel versehen. Ein solches Vorgehen ist jedoch nicht sehr zweckmäßig, da es zusätzliche Arbeitsschritte, wie etwa Auftragen und Trocknen, beinhaltet. Eine andere Möglichkeit besteht darin, adhäsiv wirksame Substanzen in solche elastomerbildenden Massen vor deren Anwendung auf dem jeweiligen Substrat einzuarbeiten bzw. die in den elastomerbildenden Massen enthaltenen Polymere mit organischen Funktionen entsprechend zu modifizieren. Hierzu sei beispielsweise auf US-PS 4,737,562 (Dow Corning Corp.; ausgegeben am 12. April 1988), US-PS 4,329,273 (General Electric Company; ausgegeben am 11. Mai 1982) und US-PS 3,996,195 (Shinetsu Chemical Company; ausgegeben am 7. Dezember 1976) verwiesen. In den meisten Fällen verursachen diese adhäsiv wirksamen Substanzen bzw. die haftungsverbessernde organische Funktion eine merkliche Inhibierung des Vernetzungskatalysators, bei dem es sich im allgemeinen um Metalle der VIII. Nebengruppe und deren Verbindungen handelt, so daß für eine schnelle Vulkanisation und eine rasche Entfaltung der Haftungswirkung hohe Temperaturen angewendet werden müssen.

Gegenstand der Erfindung sind Organo(poly)siloxane mit Organyloxy- und Hydrogengruppen aufweisenden, endständigen Siloxaneinheiten.

Bei den erfindungsgemäßen Organo(poly)siloxanen mit Organyloxy- und Hydrogengruppen aufweisenden, endständigen Siloxaneinheiten handelt es sich vorzugsweise um solche der Formel 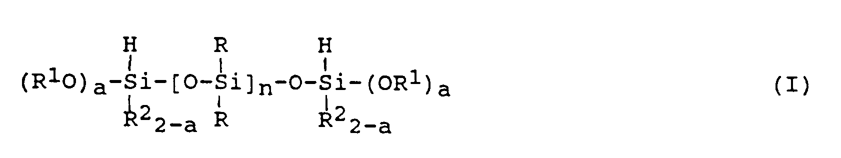
worin
R, R¹ und R² unabhängig voneinander jeweils gleich oder verschieden sein können und einen einwertigen, gegebenenfalls substituierten Kohlenwasserstoffrest, bevorzugt einen einwertigen, gegebenenfalls substituierten Kohlenwasserstoffrest mit 1 bis 13 Kohlenstoffatomen, bedeutet,
- n: eine ganze Zahl von mindestens 2, bevorzugt zwischen 10 und 2500, besonders bevorzugt zwischen 10 und 1000, insbesondere zwischen 20 und 500, und
- a: 1 oder 2, bevorzugt 2 ist.

Obwohl durch Formel (I) nicht dargestellt, können bis zu 10 Molprozent der Diorganosiloxaneinheiten durch andere Siloxaneinheiten, wie beispielsweise RSiO_{3/2}- und/oder SiO_{4/2}-Einheiten, ersetzt sein, wobei R die oben dafür angegebene Bedeutung hat. Des weiteren können die Organo(poly)siloxane gemäß Formel (I) - obwohl ebenfalls nicht in Formel (I) dargestellt - herstellungsbedingt bis zu 20 Molprozent andere funktionelle Gruppen, wie beispielsweise Hydroxylgruppen, enthalten. Ferner können die erfindungsgemäßen Organo(poly)siloxane, obwohl in Formel (I) nicht angegeben, herstellungsbedingt in einem geringen Umfang auch 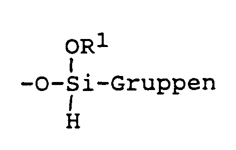
bzw. R¹O-SiR²₂-Gruppen enthalten, wobei R¹ und R² die oben dafür angegebene Bedeutung haben.

Beispiele für Kohlenwasserstoffreste mit 1 bis 13 Kohlenstoffatomen sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste sind Alkoxyalkylreste, wie der Methoxyethylrest, Halogenalkylreste, wie der Trifluorpropylrest und Acyloxyalkylreste, wie der Acetoxyethylrest.

Bei Rest R handelt es sich besonders bevorzugt um Alkylgruppen, die gegebenenfalls durch Alkylgruppen substituiert sein können, insbesondere um Methylgruppen.

Bei Rest R¹ handelt es sich besonders bevorzugt um Alkylgruppen, insbesondere um Ethylgruppen.

Bei Rest R² handelt es sich besonders bevorzugt um Alkylgruppen, die gegebenenfalls durch Alkylgruppen substituiert sein können, insbesondere um Methylgruppen.

Beispiele für die erfindungsgemäßen Organo(poly)siloxane mit Organyloxy- und Hydrogengruppen aufweisenden, endständigen Siloxaneinheiten sind
α,ω-Bis(hydrogendimethoxysiloxy)dimethyl(poly)siloxane,
α,ω-Bis(hydrogendiethoxysiloxy)dimethyl(poly)siloxane,
α,ω-Bis(hydrogenmethoxymethylsiloxy)dimethyl(poly)siloxane,
α,ω-Bis(hydrogenethoxymethylsiloxy)dimethyl(poly)siloxane
und α,ω-Bis(hydrogendiethoxysiloxy)dimethyl/methylvinylco(poly)siloxane.

Die erfindungsgemäßen Organo(poly)siloxane der Formel (I) besitzen bei einer Temperatur von 23 °C eine Viskosität von vorzugsweise 2 bis 10⁷ mPa·s.

Die erfindungsgemäßen Organo(poly)siloxane mit Organyloxy- und Hydrogengruppen aufweisenden, endständigen Siloxaneinheiten werden vorzugsweise durch Umsetzung von α,ω-Dihydroxyorgano(poly)siloxanen der Formel 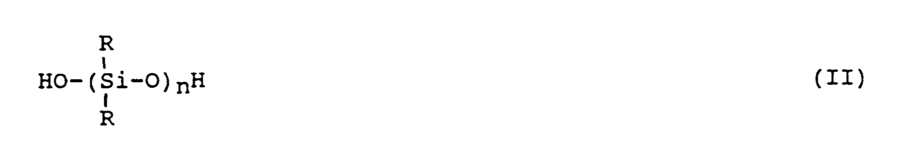
mit Silanen der Formel 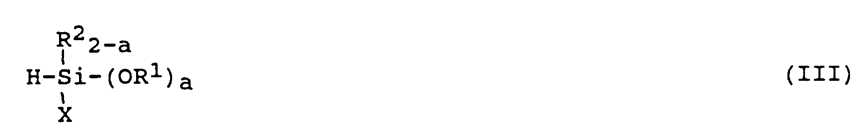
hergestellt, wobei
R, R¹, R², a und n eine der oben dafür angegebenen Bedeutungen haben und X eine leicht abspaltbare Gruppe, wie beispielsweise -OR¹, 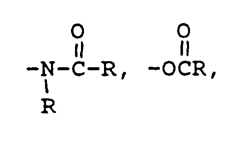
-NR¹R²
und Chloratom, insbesondere -OR¹, bedeutet, wobei R, R¹ und R² eine der oben dafür angegebenen Bedeutungen haben.

Obwohl durch Formel (II) nicht dargestellt, können bis zu 10 Molprozent der Diorganosiloxaneinheiten durch andere Siloxaneinheiten, wie beispielsweise RSiO_{3/2}- und/oder SiO_{4/2}-Einheiten, ersetzt sein, wobei R die oben dafür angegebene Bedeutung hat.

Beispiele für die im erfindungsgemäßen Verfahren eingesetzten α,ω-Dihydroxyorgano(poly)siloxane gemäß Formel (II) sind α,ω-Dihydroxydimethyl(poly)siloxane und α,ω-Dihydroxydimethyl/methylvinylco(poly)siloxane.

Die im erfindungsgemäßen Verfahren eingesetzten α,ω-Dihydroxyorgano(poly)siloxane besitzen bei 23°C vorzugsweise eine Viskosität von 2 bis 10⁷ mPa·s, besonders bevorzugt von 10 bis 10⁶ mPa·s.

Bei dem im erfindungsgemäßen Verfahren eingesetzten α,ω-Dihydroxyorgano(poly)siloxan der Formel (II) kann es sich um eine einzelne Art wie auch um ein Gemisch aus mindestens zwei verschiedenen Arten derartiger α,ω-Dihydroxyorgano(poly)siloxane handeln.

Die im erfindungsgemäßen Verfahren eingesetzten α,ω-Dihydroxyorgano(poly)siloxane sind handelsübliche Produkte bzw. nach in der Fachwelt bekannten Verfahren herstellbar.

Beispiele für die im erfindungsgemäßen Verfahren eingesetzten Silane der Formel (III) sind Hydrogentriethoxysilan, Hydrogentrimethoxysilan, Hydrogenmethyldiethoxysilan, Hydrogenmethyldimethoxysilan und Hydrogenvinyldimethoxysilan.

Bei dem erfindungsgemäßen Verfahren wird Silan der Formel (III) bevorzugt in Mengen von 1 bis 10 Mol, besonders bevorzugt in Mengen von 2 bis 5 Mol, jeweils bezogen auf 1 Mol α,ω-Dihydroxyorgano(poly)siloxan der Formel (II), eingesetzt.

Bei dem im erfindungsgemäßen Verfahren eingesetzten Silan der Formel (III) kann es sich um eine einzelne Art wie auch um ein Gemisch aus mindestens zwei verschiedenen Arten derartiger Silane handeln.

Die im erfindungsgemäßen Verfahren eingesetzten Silane der Formel (III) sind handelsübliche Produkte bzw. nach in der Fachwelt bekannten Verfahren herstellbar. Hierzu sei beispielsweise auf M. Wick, G. Kreis, F.-H. Kreuzer, "Silicone", in "Ullmanns Encyklopädie der technischen Chemie", Verlag Chemie, Weinheim, 4. Aufl., 1982, Bd. 21, Seite 485 ff verwiesen.

Vorzugweise wird die erfindungsgemäße Umsetzung von α,ω-Dihydroxyorgano(poly)siloxan gemäß Formel (II) mit Silan der Formel (III) in Anwesenheit von Katalysator durchgeführt.

Beispiele für die im erfindungsgemäßen Verfahren eingesetzten Katalysatoren sind Säuren, wie beispielsweise Hexansäure, 2-Ethylhexansäure, Laurinsäure und Malonsäure, Basen, wie beispielsweise Chinolin, sowie Verbindungen mit enolisierbaren Gruppierungen, wie beispielsweise Cumaranon, Dihydrocumarin, Phenole, wie beispielsweise 2,6-Di-tert.-butyl-4-methylphenol, 1,3-Bicarbonylverbindungen, wie beispielsweise Pentandion und Benzoylaceton, Carbonsäureester, wie beispielsweise Essigsäurepropylester, Acetessigsäureallylester, sowie Carbonsäuresalze, wie beispielsweise Calciumoctoat.

Bevorzuat werden bei dem erfindungsgemäßen Verfahren als Katalysator C₂-C₁₆-Carbonsäuren und C₂-C₁₆-Dicarbonsäuren eingesetzt, wobei Hexansäure, 2-Ethylhexansäure und Laurinsäure besonders bevorzugt sind.

Bei dem erfindungsgemäßen Verfahren wird Katalysator vorzugsweise in Mengen von 0 bis 2 Gewichtsprozent, besonders bevorzugt 0 bis 1 Gewichtsprozent, jeweils bezogen auf das Gesamtgewicht an eingesetztem α,ω-Dihydroxyorgano(poly)siloxan, eingesetzt.

Das erfindungsgemäße Verfahren wird vorzugsweise bei einem Druck von 900 bis 1100 hPa und einer Temperatur von 23 bis 220°C, besonders bevorzugt 100 bis 180°C, durchgeführt, es kann aber auch bei höheren oder niedrigeren Drücken durchgeführt werden.

Das erfindungsgemäße Verfahren hat den Vorteil, daß die erfindungsgemäßen Organo(poly)siloxane mit Organyloxy- und Hydrogengruppen aufweisenden, endständigen Siloxaneinheiten auf einfache Weise, weitgehend selektiv, mit kurzen Reaktionszeiten und hohen Ausbeuten hergestellt werden können.

Die erfindungsgemäß hergestellten Organo(poly)siloxane mit Organyloxy- und Hydrogengruppen aufweisenden, endständigen Siloxaneinheiten können für alle Zwecke verwendet werden, für die auch bisher Organo(poly)siloxane mit Organyloxygruppen bzw. Hydrogengruppen eingesetzt worden sind, wie beispielsweise zur Herstellung von Überzügen, als Haftvermittler, in gefüllten Massen und in Dichtstoffen.

Die erfindungsgemäßen Organo(poly)siloxane mit Organyloxy- und Hydrogengruppen aufweisenden, endständigen Siloxaneinheiten haben den Vorteil, daß sie sich auf einfache Weise und in überraschend kurzer Zeit in Anwesenheit von Feuchtigkeit vernetzen lassen.

Diese Vernetzung erfolgt vorteilhafterweise in Gegenwart von Kondensationskatalysator, wie beispielsweise (Organo)Metallverbindung, Carbonsäuren und Aminen, wobei bereits milde Kondensationskatalysatoren, wie etwa Carbonsäuren und Amine, ausreichend und bevorzugt sind.

Beispiele für Kondensationskatalysatoren sind Carbonsäuren, wie Hexansäure, 2-Ethylhexansäure, Laurinsäure und Malonsäure, Amine, wie Tributylamin, Dimethylbenzylamin und Triethanolamin, sowie Salze von Carbonsäuren, die Alkoholate und die Halogenide der Metalle Pb, Zn, Zr, Ti, Sb, Fe, Cd, Sn, Ba, Ca und Mn, wobei Carbonsäuren besonders bevorzugt eingesetzt werden.

Zur Vernetzung des erfindungsgemäßen Organo(poly)siloxans mit Organyloxy- und Hydrogengruppen aufweisenden, endständigen Siloxaneinheiten wird Kondensationskatalysator vorzugsweise in Mengen von 0 bis 5 Gewichtsprozent, bezogen auf das Gesamtgewicht an erfindungsgemäßem Organopolysiloxan, eingesetzt. Die Vernetzung erfolgt dabei vorzugsweise bei Raumtemperatur und einem Druck von 900 bis 1100 hPa, kann jedoch sowohl bei höheren oder niedrigeren Temperaturen wie auch bei höheren oder niedrigeren Drücken durchgeführt werden.

Ein weiterer Gegenstand der Erfindung sind unter Abspaltung von Alkoholen zu Elastomeren vernetzbare Organo(poly)siloxanmassen, dadurch gekennzeichnet, daß sie mindestens ein Organo(poly)siloxan mit Organyloxy- und Hydrogengruppen aufweisenden, endständigen Siloxaneinheiten enthalten.

Bei dem erfindungsgemäß eingesetzten Organo(poly)siloxan mit Organyloxy- und Hydrogengruppen aufweisenden, endständigen Siloxaneinheiten handelt es sich vorzugsweise um solche der Formel 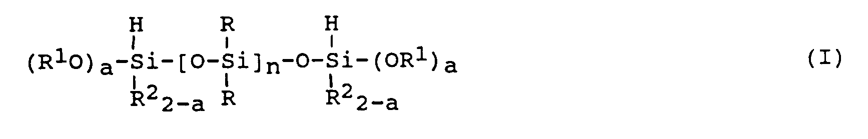
worin
R, R¹, R² und a eine der obengenannten Bedeutungen haben und n eine ganze Zahl von mindestens 2, bevorzugt zwischen 10 und 2500, besonders bevorzugt zwischen 10 und 2000, insbesondere zwischen 20 und 1500, ist.

Die erfindungsgemäßen Organo(poly)siloxane der Formel (I) besitzen bei einer Temperatur von 23°C eine Viskosität von vorzugsweise 2 bis 10⁷ mPa·s, besonders bevorzugt von 1 000 bis 400 000 mPa·s.

Bei dem erfindungsgemäß eingesetzten Organo(poly)siloxan mit Organyloxy- und Hydrogengruppen aufweisenden, endständigen Siloxaneinheiten handelt es sich besonders bevorzugt um α,ω-Bis(hydrogendiethoxysiloxy)dimethyl(poly)siloxane und α,ω-Bis(hydrogenethoxymethylsiloxy)dimethyl(poly)siloxane sowie deren Mischungen, insbesondere um α,ω-Bis(hydrogendiethoxysiloxy)dimethyl(poly)siloxane.

Vorzugsweise enthalten die erfindungsgemäßen unter Abspaltung von Alkoholen zu Elastomeren vernetzbaren Organo(poly)siloxanmassen zusätzlich zu erfindungsgemäß eingesetztem Organo(poly)siloxan mit Organyloxy- und Hydrogengruppen aufweisenden, endständigen Siloxaneinheiten mindestens ein hydridfunktionelles Organyloxysilan, vorzugsweise solches der Formel 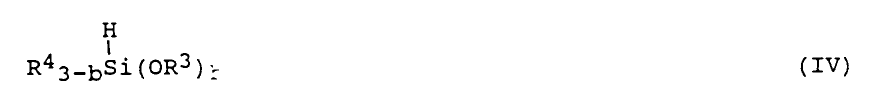
wobei R³ eine für R¹ angegebene Bedeutung hat, R⁴ eine für R² angegebene Bedeutung hat und b 2 oder 3 ist. Falls es sich bei dem erfindungsgemäß eingesetzten Organo(poly)siloxan mit Hydrogen- und Organyloxygruppen aufweisenden, endständigen Siloxaneinheiten um ein niedermolekulares Organo(poly)siloxan handelt, wie beispielsweise solches mit einem Molekulargewicht kleiner als 35 000 g/mol, kann in den erfindungsgemäßen vernetzbaren Organo(poly)siloxanmassen auch auf Silan der Formel (IV) verzichtet werden.

Beispiele für hydridfunktionelle Organyloxysilane gemäß Formel (IV) sind Hydrogentriethoxysilan, Hydrogentrimethoxysilan, Hydrogentri(n-propyloxy)silan, Hydrogenmethyldiethoxysilan, Hydrogenmethyldimethoxysilan und Hydrogenmethyldi(n-propyloxy)silan.

Die anderen Bestandteile als das erfindungsgemäß eingesetzte Organo(poly)siloxan mit Organyloxy- und Hydrogengruppen aufweisenden, endständigen Siloxaneinheiten und das gegebenenfalls eingesetzte hydridfunktionelle Organyloxysilan können in den erfindungsgemäßen unter Abspaltung von Alkoholen zu Elastomeren vernetzbaren Organo(poly)siloxanmassen die gleichen sein, wie sie bisher in den unter Abspaltung von Alkoholen zu Elastomeren vernetzbaren Organo(poly)siloxanmassen vorliegen konnten, wobei basisch wirkende Bestandteile weniger geeignet sind, da sie die Lagerstabilität herabsetzen.

Beispiele für solche anderen Bestandteile sind Silane der Formel

R⁶_{c}Si(OR⁵)_{4-c} (V)

worin R⁵ eine für R¹ angegebene Bedeutung hat, R⁶ eine für R² angegebene Bedeutung hat und c 0 oder 1 ist, oder deren Teilhydrolysate, wie Hexamethoxydisiloxan, Kondensationskatalysatoren, verstärkende anorganische Füllstoffe, nichtverstärkende anorganische Füllstoffe, Pigmente, lösliche Farbstoffe, Riechstoffe, Weichmacher, wie bei Raumtemperatur flüssige, durch Trimethylsiloxygruppen endblockierte Dimethylpolysiloxane oder Phosphorsäureester, Fungicide, harzartige Organopolysiloxane, einschließlich solcher aus (CH₃)₃SiO_{1/2}- und SiO_{4/2}-Einheiten, rein-organische Harze, wie Homo- oder Mischpolymerisate des Acrylnitrils, Styrols, Vinylchlorids oder Propylens, Korrosionsinhibitoren, Polyglykole, die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Thixotropiermittel, Haftvermittler, wie beispielsweise aminoalkyl- oder glycidoxypropylfunktionelle Silane bzw. Organo(poly)siloxane, sowie Scavenger.

Vorzugsweise enthalten die erfindungsgemäßen unter Abspaltung von Alkoholen vernetzbaren Organo(poly)siloxanmassen, jeweils bezogen auf das Gesamtgewicht der vernetzbaren Organo(poly)siloxanmasse,
(A) 20 bis 80 Gewichtsprozent, bevorzugt 30 bis 70 Gewichtsprozent, Organo(poly)siloxan mit Organyloxy- und Hydrogengruppen aufweisenden, endständigen Siloxangruppen gemäß Formel (I),
(B) 0 bis 30 Gewichtsprozent, bevorzugt 2 bis 10 Gewichtsprozent, hydridfunktionelles Organyloxysilan gemäß Formel (IV),
(C) 0 bis 5 Gewichtsprozent, bevorzugt 0 bis 2 Gewichtsprozent, Kondensationskatalysator,
(D) 0 bis 70 Gewichtsprozent, bevorzugt 8 bis 60 Gewichtsprozent, Füllstoff,
(E) 0 bis 60 Gewichtsprozent, bevorzugt 0 bis 50 Gewichtsprozent, Weichmacher,
(F) 0 bis 20 Gewichtsprozent, bevorzugt 0,5 bis 10 Gewichtsprozent, Haftvermittler,
(G) 0 bis 20 Gewichtsprozent, bevorzugt 0 bis 7 Gewichtsprozent, Scavenger sowie
(H) gegebenenfalls weitere Stoffe, wie beispielsweise Farbstoffe, Fungicide und Thixotropiermittel.

Bei Komponente (B) handelt es sich dabei vorzugsweise um hydridfunktionelles Diethoxy- oder Triethoxysilan sowie deren Mischungen, wobei das bevorzugte Mischungsverhältnis von den angestrebten mechanischen Eigenschaften bestimmt wird.

Als Kondensationskatalysator (C) können die erfindungsgemäßen Massen beliebige Kondensationskatalysatoren enthalten, die auch bisher in unter Ausschluß von Wasser lagerfähigen, bei Zutritt von Wasser bei Raumtemperatur zu Elastomeren vernetzenden Massen vorliegen konnten, wie beispielsweise (Organo)Metallverbindungen, saure Katalysatoren, wie z.B. Carbonsäuren, und basische Katalysatoren, wie z.B. Amin.

Bevorzugt unter diesen Kondensationskatalysatoren sind saure Katalysatoren wie beispielsweise Carbonsäuren, wobei Carbonsäuren, wie beispielsweise Hexansäure, 2-Ethylhexansäure, Laurinsäure, Malonsäure und Ölsäure, besonders bevorzugt eingesetzt werden.

Des weiteren können als Bestandteil (C) auch Verbindungen eingesetzt werden, die erst bei Zutritt von Wasser ihre Wirkung als saure Katalysatoren entfalten, wie beispielsweise Carbonsäureanhydride und Acyloxysilane, wie etwa Acetoxysilane.

Beispiele für die in den erfindungsgemäßen Organo(poly)siloxanmassen eingesetzten Füllstoffe (D) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Beispiele für die in den erfindungsgemäßen Organo(poly)siloxanmassen eingesetzten Weichmacher (E) sind bei Raumtemperatur flüssige, durch Trimethylsiloxygruppen endblockierte Dimethylpolysiloxane und hochsiedende Kohlenwasserstoffe.

Beispiele für die in den erfindungsgemäßen Organo(poly)siloxanmassen eingesetzten Haftvermittler (F) sind Silane und Organo(poly)siloxane mit funktionellen Gruppen, wie beispielsweise Aminoalkyl-, Glycidoxypropyl- oder Methacryloxypropylresten.

Als Scavenger (G) sind alle Verbindungen geeignet, die in der Lage sind, die Lagerstabilität der erfindungsgemäßen Organo(poly)siloxanmassen herabsetzende Moleküle, wie beispielsweise Wasser, Alkohol oder Silanole, abzufangen.

Beispiele für solche Scavenger (G) sind Silane der Formel

R⁷_{4-d}SiY_{d} (VI)

worin R⁷ gleich oder verschieden sein kann und eine der Bedeutungen von R hat, Y eine leicht abspaltbare Gruppe bedeutet, wie beispielweise 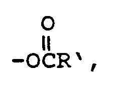
-NR''₂ und -OR''', wobei R', R'' und R''' jeweils gleich oder verschieden sein können und einen organischen Rest bedeuten, d 1, 2, 3 oder 4 ist, wie beispielsweise Triacetoxymethylsilan, Di(N-Methylacetamido)dimethylsilan und Diacetoxydimethylsilan, sowie Carbonsäinreanhydride, Carbonsäureester, Isocyanate, Molekularsiebe sowie ungesättigte organische Verbindungen gemäß US-PS 4,489,191 (General Electric Company; ausgegeben am 18. Dezember 1989).

Bei den einzelnen Bestandteilen der erfindungsgemäßen unter Abspaltung von Alkoholen vernetzbaren Organo(poly)siloxanmassen kann es sich jeweils um eine Art derartiger Bestandteile wie auch um ein Gemisch aus mindestens zwei Arten derartiger Bestandteile handeln.

Zur Bereitung der erfindungsgemäßen Massen können alle Bestandteile der jeweiligen Masse in beliebiger Reihenfolge miteinander vermischt werden. Dieses Vermischen erfolgt vorzugsweise bei Raumtemperatur. Falls erwünscht, kann dieses Vermischen aber auch bei höheren Temperaturen erfolgen, z.B. bei Temperaturen im Bereich von 35°C bis 135°C. Vorzugsweise wird bei diesem Vermischen der Zutritt von Wasser soweit wie möglich ausgeschlossen.

Nach einer bevorzugten Ausführungsform des erfindungsgemäßen Verfahrens zur Herstellung der erfindungsgemäßen Massen werden alle Bestandteile in beliebiger Reihenfolge miteinander vermischt, die Mischung in einer 1. Stufe bei einer Temperatur von vorzugsweise 15 bis 80 °C, besonders bevorzugt 40 bis 50°C, und einem Druck von vorzugsweise 900 bis 1 100 hPa für eine Dauer von vorzugsweise 20 bis 90 Minuten, besonders bevorzugt 30 bis 60 Minuten, gerührt und anschließend in einer 2. Stufe bei einem Druck von vorzugsweise 0,01 bis 100 hPa, besonders bevorzugt 1 bis 15 hPa, für eine Dauer von vorzugsweise 3 bis 60 Minuten, besonders bevorzugt 5 bis 30 Minuten, weitergerührt, wobei die Rührgeschwindigkeit so gewählt wird, daß sich die Temperatur der Masse während des Rührens ohne weitere Wärmezufuhr auf einen Wert innerhalb des Temperaturbereiches von 15°C bis 80°C erhöht.

Für die Vernetzung der erfindungsgemäßen Massen reicht der übliche Wassergehalt der Luft aus. Die Vernetzung kann, falls erwünscht, auch bei höheren oder niedrigeren Temperaturen als Raumtemperatur, z.B. bei -5° bis 10°C oder bei 30° bis 50°C durchgeführt werden.

Die erfindungsgemäßen unter Abspaltung von Alkoholen zu Elastomeren vernetzbaren Organo(poly)siloxanmassen haben den Vorteil, daß sie sich durch eine hohe Vernetzungsgeschwindigkeit und eine hohe Lagerstabilität auszeichnen. Des weiteren haben die nach dem erfindungsgemäßen Verfahren hergestellten Organo(poly)siloxanmassen den Vorteil, daß sie selbst bei langer Lagerung keine Wasserstoffentwicklung zeigen.

Die erfindungsgemäßen Massen können für alle Verwendungszwecke eingesetzt werden, für die unter Ausschluß von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzten Oberflächen, oder das Gleiten verhindernden Überzügen, oder von gummielastischen Formkörpern sowie für die Isolierung von elektrischen oder elektronischen Vorrichtungen.

Ein weiterer Gegenstand der Erfindung ist ein Verfahren zur Herstellung von Organopolysiloxanelastomeren durch Vernetzung von durch Anlagerung von Si-gebundenem Wasserstoff an SiC-gebundene organische Reste mit aliphatischer Kohlenstoff-Kohlenstoff-Mehrfachbindung vernetzbaren Massen, dadurch gekennzeichnet, daß die vernetzbaren Massen mindestens ein Organo(poly)siloxan mit Organyloxy- und Hydrogengruppen aufweisenden, endständigen Siloxaneinheiten enthalten.

Bei den im erfindungsgemäßen Verfahren eingesetzten Organopolysiloxanen mit Organyloxy- und Hydrogengruppen aufweisenden, endständigen Siloxaneinheiten handelt es sich bevorzugt um α,ω-Bis(hydrogendialkoxysiloxy)dimethyl(poly)siloxane, deren Alkoxygruppen 1 bis 3 Kohlenstoffatomen aufweisen, wobei α,ω-Bis(hydrogendiethoxysiloxy)dimethyl(poly)siloxane besonders bevorzugt werden.

Die im erfindungsgemäßen Verfahren eingesetzten Organo(poly)siloxane der Formel (I) besitzen bei einer Temperatur von 23 °C eine Viskosität von vorzugsweise 2 bis 10⁷ mPa·s, besonders bevorzugt 10 bis 1 000, insbesondere 20 bis 300 mPa·s.

Die anderen Bestandteile als das erfindungsgemäß eingesetzte Organo(poly)siloxan mit Organyloxy- und Hydrogengruppen aufweisenden, endständigen Siloxaneinheiten der im erfindungsgemäßen Verfahren verwendeten vernetzbaren Massen können die gleichen sein, wie sie in den bisher zur Herstellung von Organopolysiloxanelastomeren verwendeten, durch Anlagerung von Si-gebundenem Wasserstoff an SiC-gebundene Reste mit aliphatischer Kohlenstoff-Kohlenstoff-Mehrfachbindung vernetzbaren Massen vorliegen konnten.

Die wesentlichen Bestandteile sind, abgesehen vom erfindungsgemäß eingesetzten Organo(poly)siloxan mit Organyloxy- und Hydrogengruppen aufweisenden, endständigen Siloxaneinheiten (a)
(b) SiC-gebundene Reste mit aliphatischer Kohlenstoff-Kohlenstoff-Mehrfachbindung enthaltende Organopolysiloxane, vorzugsweise solche der Formel

   R⁸₂R⁹SiO(R⁸₂SiO)ₑSiR⁹R⁸₂ (VII)

   wobei R⁸ gleiche oder verschiedene, von aliphatischer Kohlenstoff-Kohlenstoff-Mehrfachbindung freie, einwertige, SiC-gebundene organische Reste, R⁹ gleiche oder verschiedene, einwertige SiC-gebundene Reste mit aliphatischer Kohlenstoff-Kohlenstoff-Mehrfachbindung und e eine ganze Zahl mit einem solchen Wert bedeutet, daß die durchschnittliche Viskosität 100 bis 10⁶ mPa·s bei 25°C beträgt,
(c) Verbindungen mit SiC-gebundenem Wasserstoff, vorzugsweise lineare, cyclische oder verzweigte Organopolysiloxane aus Einheiten der Formel 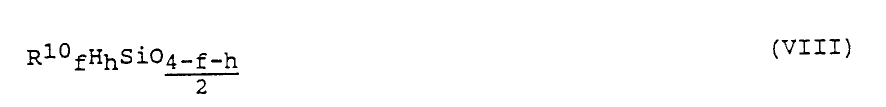 worin R¹⁰ eine für R⁸ angegebene Bedeutung hat, f 0, 1, 2 oder 3, h 0 oder 1 und die Summe aus f und h 0, 1, 2 oder 3 ist, mit der Maßgabe, daß je Molekül mindestens zwei Si-gebundene Wasserstoffatome vorliegen, und
(d) die Anlagerung von Si-gebundenem Wasserstoff an SiC-gebundene Reste mit aliphatischer Kohlenstoff-Kohlenstoff-Mehrfachbindung fördernder Katalysator.

Vorzugsweise handelt es sich bei den Resten R⁸ und R¹⁰ um von aliphatischer Kohlenstoff-Kohlenstoff-Mehrfachbindung freie Kohlenwasserstoffreste mit 1 bis 8 Kohlenstoffatomen, die mit Halogenatomen substituiert sein können.

Besonders bevorzugt handelt es sich bei den Resten R⁸ und R¹⁰ um Alkylreste mit 1 bis 8 Kohlenstoffatomen sowie um den Phenylrest.

Vorzugsweise handelt es sich bei dem Rest R⁹ um aliphatische Kohlenstoff-Kohlenstoff-Mehrfachbindung aufweisende Kohlenwasserstoffreste mit 2 bis 12 Kohlenstoffatomen.

Besonders bevorzugt handelt es sich bei Rest R⁹ um den Vinylrest.

Vorzugsweise liegt Si-gebundener Wasserstoff in Mengen von 1,1 bis 2,0 Si-gebundenen Wasserstoffatomen je SiC-gebundenem Rest mit aliphatischer Kohlenstoff-Kohlenstoff-Mehrfachbindung vor.

Die im erfindungsgemäßen Verfahren eingesetzten Bestandteile (b) und (c) sind handelsübliche Produkte bzw. nach in der Siliciumchemie gängigen Methoden herstellbar. Hierzu sei zum Beispiel auf W. Noll, "Chemistry and Technology of Silicones", Academic Press, Orlando, 1968, Seite 191 ff und M. Wick, G. Kreis, F.-H. Kreuzer, "Silicone", in "Ullmanns Encyklopädie der technischen Chemie", Verlag Chemie, Weinheim, 4. Aufl., 1982, Bd. 21, Seite 511 ff verwiesen.

Die eingesetzten Katalysatoren (d) können im Rahmen des erfindungsgemäßen Verfahrens die gleichen sein, die auch bisher zum Anlagern von Si-gebundenen Wasserstoffatomen an SiC-gebundene Reste mit aliphatischer Mehrfachbindung eingesetzt wurden. Es handelt sich dabei hauptsächlich um Metalle der 8. Nebengruppe und um deren anorganische und organische Verbindungen, wobei Platin und dessen Verbindungen bevorzugt werden.

Beispiele für solche Katalysatoren sind auf einem inerten Träger, wie Aktivkohle, SiO₂ oder Al₂O₃, abgeschiedenes, feinverteiltes elementares Platin gemäß US-PS 2,970,150 (D.L. Bailey, Union Carbide Corporation; ausgegeben am 31. Januar 1961), Hexachloroplatinsäure gemäß US-PS 2,823,218 (J.L. Speier, Dow Corning Corporation; ausgegeben am 11. Februar 1958) und davon abgeleitete Chloroplatinate, Platinkomplexe des Typs L·PtCl₂, wobei L ein lineares oder cyclisches Monoolefin, wie Ethen, Propen und Cyclohexen, bedeutet, gemäß US-PS 3,159,601 und US-PS 3,159,662 (Bruce A. Ashby , General Electric Company; jeweils ausgegeben am 1. Dezember 1964), Platinkomplexe des Typs L·PtCl₂, wobei L ein cyclisches Diolefin, wie 1,5-Cyclooctadien, Norbornadien und Cyclopentadien, bedeutet, gemäß JP-OS 79/76,529 und JP-OS 79/76,530 (Masatoshi Arai, Shin-Etsu Chemical Industry Co., Ltd.; jeweils ausgegeben am 19. Juni 1979) und US-PS 4,276,252 (G. Kreis, Wacker-Chemie GmbH, ausgegeben am 30. Juni 1981) oder ein cyclisches Polyolefin bedeutet gemäß der deutschen Anmeldung mit dem Aktenzeichen P 39 06 514.6 (G. Wenski, Consortium für elektrochemische Industrie GmbH; angemeldet am 1. März 1989), Platinvinylsiloxankomplexe gemäß US-PS 3,814,730 (B.D. Karstedt, General Electric Company; ausgegeben am 4. Juni 1974) und Acetylacetonatkomplexe des Platins gemäß US-PS 4,177,341 (G. Kreis, Consortium für elektrochemische Industrie GmbH; ausgegeben am 4. Dezember 1979).

Bei den im erfindungsgemäßen Verfahren eingesetzten Massen kann eine Art von Katalysator (d) verwendet werden. Es kann aber auch ein Gemisch aus mindestens zwei verschiedenen Arten derartiger Katalysatoren verwendet werden. Ebenso kann eine Art von Bestandteil (a), aber auch ein Gemisch aus mindestens zwei verschiedenen Arten von Bestandteil (a), eine Art von Bestandteil (b), aber auch ein Gemisch aus mindestens zwei verschiedenen Arten von Bestandteil (b) und schließlich eine Art von Bestandteil (c), aber auch ein Gemisch aus mindestens zwei verschiedenen Arten von Bestandteil (c) in den bei dem erfindungsgemäßen Verfahren eingesetzten Massen vorliegen.

Die im Rahmen des erfindungsgemäßen Verfahrens eingesetzten Mengen an Katalysator können die gleichen sein wie bei den bisher bekannten Verfahren zum Anlagern von Si-gebundenem Wasserstoff an SiC-gebundene Reste mit aliphatischer Mehrfachbindung in Gegenwart von Katalysator. Es sind dies vorzugsweise 0,1 bis 500 Gewichts-ppm, jeweils berechnet als elementares Platin und bezogen auf das Gesamtgewicht der Bestandteile (b) und (c).

Bei dem erfindungsgemäßen Verfahren wird Organo(poly)siloxan mit Organyloxy- und Hydrogengruppen aufweisenden, endständigen Siloxaneinheiten (a) vorzugsweise in Mengen von insgesamt 1 bis 20 Gewichtsprozent, besonders bevorzugt 2 bis 10 Gewichtsprozent, jeweils bezogen auf das Gesamtgewicht der Bestandteile (b) und (c) eingesetzt. Beträgt die Menge des Zusatzes (a) weniger als 1 Gewichtsprozent, bezogen auf das Gesamtgewicht der Bestandteile (b) und (c), so kann die Haftung der Elastomere auf den Substraten unbefriedigend gering sein. Beträgt die Menge des Zusatzes (a) mehr als 20 Gewichtsprozent, bezogen auf das Gesamtgewicht der Bestandteile (b) und (c), kann keine wesentliche Steigerung der Adhäsion mehr erzielt werden.

Vorzugsweise enthalten die im erfindungsgemäßen Verfahren eingesetzten Massen zusätzlich zu den Bestandteilen (a), (b), (c) und (d) Verbindungen, die bei Temperaturen oberhalb von etwa 23°C physikalisch oder chemisch gebundenes Wasser abgeben (e).

Beispiele für solche Verbindungen (e) sind Stärke, Johannisbrotmehl, Gelatine, Methylcellulose und Alginsäure sowie Gemische davon, wobei Alginsäure und Kartoffelstärke bevorzugt eingesetzt werden.

Bei dem erfindungsgemäßen Verfahren werden Verbindungen (e) vorzugsweise in Mengen von 0 bis 50 Gewichtsprozent, besonders bevorzugt 8 bis 30 Gewichtsprozent, jeweils bezogen auf das Gesamtgewicht des Bestandteils (a), eingesetzt.

Des weiteren können die im erfindungsgemäßen Verfahren eingesetzten Massen zusätzlich zu den Bestandteilen (a), (b), (c), (d) und (e) Stoffe enthalten, die auch in den bisher bekannten zur Herstellung von Organopolysiloxanelastomeren verwendbaren, durch Anlagerung von Si-gebundenem Wasserstoff an aliphatische Kohlenstoff-Kohlenstoff-Mehrfachbindung vernetzbaren Massen zusätzlich zu Organopolysiloxan mit Si-gebundenem Wasserstoff, SiC-gebundene Reste mit aliphatischen Kohlenstoff-Kohlenstoff-Mehrfachbindungen enthaltenden Organopolysiloxanen und Katalysator vorliegen konnten, wobei aufgrund der im Bestandteil (a) enthaltenen Organyloxy- und Hydrogengruppen aufweisenden, endständigen Siloxaneinheiten basisch wirkende Zusätze ungeeignet sind.

Beispiele für solche weiteren zusätzlichen Stoffe sind anorganische Füllstoffe mit einer BET-Oberfläche von mindestens 50 m²/g, wie pyrogen erzeugtes Siliciumdioxyd oder gefälltes Siliciumdioxyd mit einer BET-Oberfläche von mindestens 50 m²/g, anorganische Füllstoffe mit einer Oberfläche von weniger als 50 m²/g, wie Quarzmehl, Glasfasern, gefälltes Siliciumdioxyd mit einer BET-Oberfläche von weniger als 50 m²/g oder Diatomeenerde, elektrisch leitfähig machende Stoffe, wie Acetylenruß, Pigmente, lösliche Farbstoffe, Weichmacher, Organopolysiloxanharze, wie solche aus Einheiten der Formel R¹¹R¹²₂SiO_{1/2}, R¹²₃SiO_{1/2}, und SiO_{4/2}, wobei R¹¹ eine der oben für R⁹ angegebene Bedeutung hat und R¹² eine der oben für R⁸ angegebene Bedeutung hat, rein organische Harze, wie Polyvinylchloridpulver, andere Mittel zur Verbesserung der Haftung der Elastomere auf den Substraten als erfindungsgemäß verwendeter Zusatz (a) und die Vernetzung verzögernde bzw. regelnde Mittel, wie Maleinsäuremonoallylester, Benzotriazol, 1,3-Divinyltetramethyldisiloxan, 1-Ethinylcyclohexanol und 2-Methyl-3-butin-2-ol.

Die Herstellung der im erfindungsgemäßen Verfahren verwendeten, durch Anlagerung von Si-gebundenem Wasserstoff an SiC-gebundene Reste mit aliphatischer Kohlenstoff-Kohlenstoff-Mehrfachbindung vernetzbaren Massen kann durch Vermischen ihrer Bestandteile nach für die Bereitung von durch Anlagerung von Si-gebundenem Wasserstoff an SiC-gebundene Reste mit aliphatischer Kohlenstoff-Kohlenstoff-Mehrfachbindung vernetzbaren Massen üblichen Verfahren erfolgen. Werden die bei dem erfindungsgemäßen Verfahren eingesetzten, vernetzbaren Massen aus mehr als einer Komponente bereitet, wie es bei schon bei Raumtemperatur vernetzbaren Massen sehr häufig der Fall ist, wobei im allgemeinen eine Komponente Bestandteil (b) und Bestandteil (d), eine weitere Komponente Bestandteil (c) enthält, oder Bestandteil (d) in einer dritten Komponente vorliegt, so ist es gleichgültig, in welcher Komponente Bestandteil (a) vorliegt, oder ob Bestandteil (a) in eine Mischung aus der Gesamtheit der übrigen Bestandteile eingemischt wird, solange diese Mischung nicht zu rasch vernetzt. Bei Komponenten, die Bestandteil (a) enthalten, sollte eine Lagerung in Anwesenheit von Feuchtigkeit ausgeschlossen werden.

Die im Rahmen des erfindungsgemäßen Verfahrens angewandten Temperaturen und Drücke können die gleichen sein wie bei den bisher bekannten Verfahren zum Anlagern von Si-gebundenem Wasserstoff an SiC-gebundene Reste mit aliphatischer Kohlenstoff-Kohlenstoff-Mehrfachbindung. Es sind dies vorzugsweise Temperaturen zwischen 15 und 150°C und Drücke zwischen 900 und 1100 hPa, wobei Temperaturen zwischen 40 und 80°C besonders bevorzugt sind. Falls erwünscht, können auch höhere oder niedrigere Drücke angewendet werden.

Abhängend von der Zusammensetzung der erfindungsgemäß eingesetzten, vernetzbaren Massen ist die Vernetzung nach 30 Minuten bis einigen Stunden beendet.

Beispiele für Substrate, auf denen nach dem erfindungsgemäßen Verfahren Elastomere erzeugt werden können und dann die Elastomeren auf diesen Substraten auch ohne vorhergehende Grundierung vielfach gut haften, sind silikatische Stoffe, wie Porzellan, Steingut, Emaille und Glas, Metalle, wie Stahl, Aluminium und Kupfer, sowie Holz und Kunststoffe, wie Polyvinylchlorid, Polycarbonate und glasfaserverstärkte Epoxyharze. Eine Vorbehandlung der Substrate mit üblichen Grundierungen, wie sie beispielsweise in US-PS 4,900,362 (Shinetsu Chemical Company, ausgegeben am 13. Februar 1990) und EP-OS 241 759 (Dow Corning Corp., ausgegeben am 21. Oktober 1987) beschrieben sind, oder mit Niedertemperaturplasmen kann jedoch die Haftung noch zusätzlich verstärken.

Das erfindungsgemäße Verfahren eignet sich z.B. zum Vergießen oder Einbetten beispielsweise von elektrischen, oder elektronischen oder photovoltaischen Bauelementen, zum Abdichten, zur Erzeugung von Beschichtungen, zum Verkleben, beispielsweise beim Verbinden von Glasplatten oder Platten aus Kunststoff miteinander und zum Isolieren von elektrischen Leitern.

Das erfindungsgemäße Verfahren hat den Vorteil, daß die Organopolysiloxanelastomere auf den Substraten, auf denen sie erzeugt werden, im allgemeinen sehr gut haften. Dabei entfaltet sich die Adhäsion bei der erfindungsgemäßen Herstellung der Elastomeren bereits bei relativ niedrigen Temperaturen, wie beispielsweise bei 40 bis 80 °C sehr rasch. Insbesondere durch den kombinierten Einsatz von Organo(poly)siloxan mit Organyloxy- und Hydrogengruppen aufweisenden, endständigen Siloxaneinheiten und Verbindungen, die oberhalb von etwa 23°C physikalisch oder chemisch gebundenes Wasser abgeben, in durch Anlagerung von Si-gebundenem Wasserstoff an SiC-gebundene Reste mit aliphatischer Kohlenstoff-Kohlenstoff-Mehrfachbindung vernetzbaren Massen wird bei der Herstellung der Elastomere die Haftung auf dem jeweiligen Substrat erheblich verstärkt.

Die erfindungsgemäße Verwendung von Organo(poly)siloxan mit Organyloxy- und Hydrogengruppen aufweisenden, endständigen Siloxaneinheiten in durch Anlagerung von Si-gebundenem Wasserstoff an SiC-gebundene organische Reste mit aliphatischer Kohlenstoff-Kohlenstoff-Mehrfachbindung vernetzbaren Massen hat den Vorteil, daß das Organo(poly)siloxan mit Organyloxy- und Hydrogengruppen aufweisenden, endständigen Siloxaneinheiten mit den anderen Bestandteilen solcher vernetzbarer Massen gut mischbar ist und mit diesen anderen Bestandteilen im allgemeinen keine unerwünschten Wechselwirkungen zeigt.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

In den folgenden Beispielen werden Shore-A-Härte nach DIN (Deutsche Industrie Norm) 53 505-87, die Reißfestigkeit, die Reißdehnung sowie das Modul (Zugfestigkeit nach 100 % Dehnung) jeweils nach DIN 53504-85S1 und die Weiterreißfestigkeit nach ASTM D624B-73 bestimmt.

Ferner werden die folgenden Abkürzungen verwendet:
- Et: - Ethylrest
- Me: - Methylrest
- U/min: - Umdrehungen/Minute.

### Beispiel 1

a)
   1036 g α,ω-Dihydroxydimethylsiloxan mit durchschnittlich 70 Dimethylsiloxyeinheiten, 132 g Hydrogentriethoxysilan (Silicon Compounds Register and Review; Petrarch Systems: Silane and Silicones, ABCR Karlsruhe GmbH und Co., D-7500 Karlsruhe) und 11,6 g calciumoctoat 50 gewichtsprozentig gelöst in 2-Ethylhexansäure (käuflich erhältlich bei Abshagen & Co. KG., D-2000 Hamburg) werden unter Ausschluß von Feuchtigkeit gut vermischt, auf 130°C erwärmt, eine Stunde bei 130°C gerührt und durch kurzes Evakuieren (15 Minuten/5 mbar) die flüchtigen Anteile entfernt. Anschließend wird über Cellulose filtriert. Es werden 1047 g eines klaren, farblosen Öles mit einer Viskosität von 90 mPa·s erhalten, das nach ²⁹Si-NMR-Spektroskopie zu über 95% H-Si(OEt)₂-Endgruppen aufweist.
b)
   Das unter a) erhaltene Organopolysiloxan wird auf einer Glasplatte der Luftfeuchtigkeit ausgesetzt. Nach 60 Minuten bildet sich eine grifftrockene Oberfläche und nach 120 Minuten ist ein durchvulkanisierter, gummielastischer, gut haftender, optisch klarer Film entstanden.
c)
   5 g des unter a) erhaltenen Organopolysiloxans und 0,1 ml Wasser werden mit einem "Ultra-Turrax" intensiv vermischt und verschlossen stehen gelassen. Nach 8 Minuten ist eine gummielastische Masse entstanden.

### Beispiel 2

Die in Beispiel 1 unter a) beschriebene Verfahrensweise wird wiederholt mit der Abänderung, daß die Reaktionstemperatur anstelle von 130°C 60°C beträgt. Es werden 1050 g eines klaren, farblosen Öles mit einer Viskosität von 80 mPa·s erhalten, das nach ²⁹Si-NMR-Spektroskopie zu über 95% H-Si(OEt)₂-Endgruppen aufweist.

### Beispiel 3

a)
   51,8 g α,ω-Dihydroxydimethylpolysiloxan mit durchschnittlich 70 Dimethysiloxyeinheiten, 6,56 g Hydrogentriethoxysilan und 0,58 g 2-Ethylhexansäure werden unter Ausschluß von Feuchtigkeit gut vermischt, auf 130°C erwärmt, eine Stunde bei 130°C gerührt und durch kurzes Evakuieren (15 Minuten / 7 mbar) die flüchtigen Bestandteile entfernt. Anschließend wird über Cellulose filtriert. Es werden 40 g eines klaren, farblosen Öles mit einer Viskosität von 95 mPa·s erhalten, das nach ²⁹Si-NMR-Spektroskopie zu über 95% H-Si(OEt)₂-Endgruppen aufweist.
b)
   Das unter a) erhaltene Organopolysiloxan wird auf einer Glasplatte der Luftfeuchtigkeit ausgesetzt. Nach 15 Minuten bildet sich eine grifftrockene Oberfläche und nach 25 Minuten ist ein durchvulkanisierter, gummielastischer, gut haftender, optisch klarer Film entstanden.

### Beispiel 4

a)
Die in Beispiel 3 unter a) beschriebene Verfahrensweise wird wiederholt mit der Abänderung, daß anstelle der 0,58 g 2-Ethylhexansäure 0,60 g Cumaranon (käuflich erhältlich bei der Janssen Chimica, D-4054 Nettetal 2) eingesetzt wird und anstatt von 7 mbar mit 5 mbar evakuiert wird. Es werden 50 g eines klaren, farblosen Öles mit einer Viskosität von 85 mPa·s erhalten, das nach ²⁹Si-NMR-Spektroskopie
zu 80% 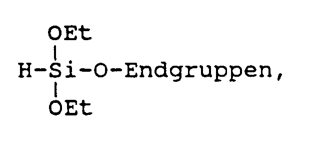 δ(²⁹Si)= -67.5 ppm, und
zu 20% durch Kettenverlängerung (weitere Reaktion einer HSi(OEt)₂-Gruppe) entstandene 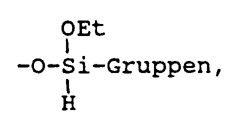 δ(²⁹Si)= -76.3 ppm, aufweist.
b)
Jeweils 10 g des unter a) erhaltenen Organopolysiloxans werden mit den in Tabelle 1 angegebenen Mengen an 2-Ethylhexansäure versetzt und auf einer Glasplatte der Luftfeuchtigkeit ausgesetzt.

**Tabelle 1**

| Versuch | 2-Ethylhexansäure [g] | T₁ [min] | T₂ [min] |
|---|---|---|---|
| 4b1 | - | keine Vernetzung ¹⁾ | |
| 4b2 | 0,02 | 10 | 20 |
| 4b3 | 0,05 | 10 | 20 |
| 4b4 | 0,10 | 10 | 20 |
| 4b5 | 0,20 | 5 | 12 |

| | | | |
|---|---|---|---|
| 1) nach 24 Stunden | | | |
| T₁: Hautbildungszeit T₂: Zeit bis zur vollständigen Vernetzung | | | |

c)
Jeweils 5 g des unter a) erhaltenen Organopolysiloxans werden mit den in Tabelle 2 angegebenen Mengen an 2-Ethylhexansäure und 0,1 ml Wasser mit einem "Ultra-Turrax" intensiv vermischt und verschlossen stehen gelassen. Nach den in Tabelle 2 angegebenen Zeiten T₃ wird jeweils eine gummielastische Masse erhalten.

**Tabelle 2**

| Versuch | 2-Ethylhexansäure [g] | T₃ [min] |
|---|---|---|
| 4c1 | - | keine Vernetzung ¹⁾ |
| 4c2 | 0,01 | 14 |
| 4c3 | 0,025 | 10 |
| 4c4 | 0,05 | 4 |
| 4c5 | 0,1 | 1 |

| | | |
|---|---|---|
| 1) nach 24 Stunden | | |

d)
Jeweils 10 g des unter a) erhaltenen Organopolysiloxans werden mit den in Tabelle 3 angegebenen Mengen an 2-Ethylhexansäure versetzt und unter Feuchtigkeitsausschluß 16 Stunden bei einer Temperatur von 100 °C gelagert. Nach der Hitzelagerung wird die Masse auf einer Glasplatte der Luftfeuchtigkeit ausgesetzt.

**Tabelle 3**

| Versuch | 2-Ethylhexansäure [g] | T₁ [min] | T₂ [min] |
|---|---|---|---|
| 4d1 | 0,02 | 15 | 30 |
| 4d2 | 0,20 | 3 | 15 |
| T₁: Hautbildungszeit T₂: Zeit bis zur vollständigen Vernetzung | | | |

e)
Jeweils 5 g des unter a) erhaltenen Organopolysiloxans werden mit den in Tabelle 4 angegebenen Mengen an 2-Ethylhexansäure versetzt und unter Feuchtigkeitsausschluß 16 Stunden bei einer Temperatur von 100 °C gelagert. Nach der Hitzelagerung werden 0,1 ml Wasser mit einem "Ultra-Turrax" intensiv dazugemischt und verschlossen stehen gelassen. Nach den in Tabelle 4 angegebenen Zeiten T₃ wird jeweils eine gummielastische Masse erhalten.

**Tabelle 4**

| Versuch | 2-Ethylhexansäure [g] | T₃ [min] |
|---|---|---|
| 4e1 | 0,01 | 14 |
| 4e2 | 0,10 | 2 |

### Beispiel 5

51,8 g α,ω-Dihydroxydimethylpolysiloxan mit durchschnittlich 70 Dimethysiloxyeinheiten, 6,56 g Hydrogentrimethoxysilan (Silicon Compounds Register and Review; Petrarch Systems: Silane and Silicones, ABCR Karlsruhe GmbH und Co., D-7500 Karlsruhe) und 0,58 g Cumarin werden unter Ausschluß von Feuchtigkeit gut vermischt, auf 130°C erwärmt, eine Stunde bei 130°C gerührt und durch kurzes Evakuieren (15 Minuten / 5 mbar) die flüchtigen Bestandteile entfernt. Anschließend wird über Cellulose filtriert. Es werden 40 g eines klaren, leicht gelblichen Öles mit einer Viskosität von 80 mPa·s erhalten, das nach ²⁹Si-NMR-Spektroskopie
zu 75% 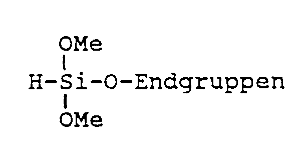
und
zu 25% durch Kettenverlängerung (weitere Reaktion einer HSi(OMe)₂-Gruppe) entstandene 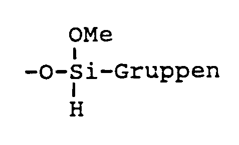
aufweist.

### Beispiel 6

51,8 g α,ω-Dihydroxydimethylpolysiloxan mit durchschnittlich 70 Dimethysiloxyeinheiten, 6,56 g Hydrogentriethoxysilan und 0,60 g Dihydrocumarin werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 50 g eines klaren, farblosen Öles mit einer Viskosität von 80 mPa·s erhalten, das nach ²⁹Si-NMR-Spektroskopie über 90% H-Si-(OEt)₂-Endgruppen aufweist.

### Beispiel 7

51,8 g α,ω-Dihydroxydimethylpolysiloxan mit durchschnittlich 60 Dimethysiloxyeinheiten, 6,60 g Hydrogentriethoxysilan und 0,58 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 52 g eines klaren, farblosen Öles mit einer Viskosität von 70 mPa·s erhalten, das nach ²⁹Si-NMR-Spektroskopie 100% H-Si-(OEt)₂-Endgruppen aufweist.

### Beispiel 8

Die in Beispiel 7 beschriebene Verfahrensweise wird wiederholt mit der Abänderung, daß anstelle von 0,58 g Pentandion 0,58 g Essigsäurepropylester eingesetzt wird. Es werden 52 g eines klaren, farblosen Öles mit einer Viskosität von 65 mPa·s erhalten, das nach ²⁹Si-NMR-Spektroskopie 100% H-Si-(OEt)₂-Endgruppen aufweist.

### Beispiel 9

Die in Beispiel 7 beschriebene Verfahrensweise wird wiederholt mit der Abänderung, daß anstelle von 0,58 g Pentandion 0,58 g Acetessigsäureallylester eingesetzt wird. Es werden 52 g eines klaren, farblosen Öles mit einer Viskosität von 70 mPa·s erhalten, das nach ²⁹Si-NMR-Spektroskopie 100% H-Si-(OEt)₂-Endgruppen aufweist.

### Beispiel 10

Die in Beispiel 7 beschriebene Verfahrensweise wird wiederholt mit der Abänderung, daß anstelle von 0,58 g Pentandion 0,58 g 2,6-Di-tert.-butyl-4-methylphenol eingesetzt wird. Es werden 48 g eines klaren, farblosen Öles mit einer Viskosität von 75 mPa·s erhalten, das nach ²⁹Si-NMR-Spektroskopie 100% H-Si-(OEt)₂-Endgruppen aufweist.

### Vergleichsbeispiel 1

10 g eines α,ω-Triethoxysilyldimethylpolysiloxans mit durchschnittlich 60 Dimethylsiloxyeinheiten, welches nach der in Beispiel 1 unter a) beschriebenen Verfahrensweise hergestellt wird mit der Abänderung, daß anstelle von Hydrogentriethoxysilan Tetraethoxysilan eingesetzt wird, werden mit 0,05 g 2-Ethylhexansäure vermischt und auf einer Glasplatte der Luftfeuchtigkeit ausgesetzt. Es erfolgt innerhalb von 24 Stunden keine Vernetzung.

### Beispiel 11

Die in Beispiel 3 unter a) beschriebene Verfahrensweise wird wiederholt mit der Abänderung, daß anstelle von α,ω-Dihydroxydimethylpolysiloxan mit durchschnittlich 60 Dimethylsiloxyeinheiten α,ω-Dihydroxydimethyl/methylvinylcopolysiloxan mit durchschnittlich 70 Siloxyeinheiten und einem Vinylgehalt von 5 Molprozent, welches aus den entsprechenden Silanen durch Cohydrolyse und Cokondensation hergestellt werden kann (vgl. beispielsweise Encycl. Polym. Sci. 15 (1989) 236), eingesetzt wird. Es werden 40 g eines klaren, farblosen Öles mit einer Viskosität von 80 mPa·s erhalten, das nach ²⁹Si-NMR-Spektroskopie über 95% H-Si-(OEt)₂-Endgruppen aufweist.

### Beispiel 12

Die in Beispiel 3 unter a) beschriebene Verfahrensweise wird wiederholt mit der Abänderung, daß anstelle von α,ω-Dihydroxydimethylpolysiloxan mit durchschnittlich 60 Dimethylsiloxyeinheiten α,ω-Dihydroxydimethyl/methylphenylcopolysiloxan mit durchschnittlich 70 Siloxyeinheiten und einem Phenylgehalt von 5 Molprozent, welches aus den entsprechenden Silanen durch Cohydrolyse und Cokondensation hergestellt werden kann (vgl. beispielsweise Encycl. Polym. Sci. 15 (1989) 236), eingesetzt wird. Es werden 49 g eines klaren, farblosen Öles mit einer Viskosität von 80 mPa·s erhalten, das nach ²⁹Si-NMR-Spektroskopie über 95% H-Si-(OEt)₂-Endgruppen aufweist.

### Beispiel 13

### A) Herstellung von α,ω-Di(diethoxyhydrogen)dimethyl-polysiloxan (Polymer I)

An einem Rotationsverdampfer werden 500 g eines α,ω-Dihydroxydimethylpolysiloxans mit einer Viskosität von etwa 80 000 mPa·s und durchschnittlich 900 bis 1 000 Dimethylsiloxyeinheiten mit 20 g Hydrogentriethoxysilan und 1,6 g 2-Ethylhexansäure 30 Minuten unter Stickstoff auf 70°C erhitzt. Dann wird bei einem Druck von 0,1 bis 1,5 kPa überschüssiges Silan abdestilliert. Im ²⁹Si-NMR-Spektrum ist zu erkennen, daß die Endblockierung der Silanolgruppen quantitativ abgelaufen ist.

In einem 5 l Planetenmischer (Typ FH6-S der Fa. Drais-Werke GmbH, D-6800 Mannheim) werden 52 Teile Polymer I, 30 Teile α,ω-Di(trimethylsiloxy)dimethylpolysiloxan mit einer Viskosität von etwa 100 mPa·s, 14,5 Teile pyrogene Kieselsäure (erhältlich als HDK H 15 von der Wacker-Chemie GmbH, D-8000 München) sowie 0,3 Teile 2-Ethylhexansäure innerhalb von 5 Minuten mit einer Drehzahl von 120 U/min homogen vermischt. Die so erhaltene Masse wird unter Feuchtigkeitsausschluß in Tuben abgefüllt und bei einer Temperatur von 50°C gelagert. Angaben über die Lagerstabilität finden sich in Tabelle 5.

Die so erhaltenen Masse wird nach einem Tag bzw. 30 Tagen Lagerung der Luftfeuchtigkeit ausgesetzt. Die Zeit bis zur Ausbildung einer trockenen Oberfläche (Hautbildungszeit) findet sich in Tabelle 5.

### Beispiel 14

Die in Beispiel 13 angegebene Verfahrensweise wird wiederholt mit der Abänderung, daß anstelle von 14,5 Teilen 14,0 Teile pyrogene Kieselsäure eingesetzt werden und zusätzlich 5,0 Teile Hydrogentriethoxysilan zugegeben werden. Angaben über die Lagerstabilität und Hautbildungszeiten finden sich in Tabelle 5.

### Beispiel 15

Die in Beispiel 14 beschriebene Verfahrensweise wird wiederholt mit der Abänderung, daß das Vermischen der Bestandteile anstelle von 5 Minuten mit einer Drehzahl von 120 U/min 35 Minuten mit einer Drehzahl von 160 U/min und bei einer Temperatur von 45°C durchgeführt wird, wobei im Anschluß daran die Mischung weitere 10 Minuten mit einer Drehzahl von 160 U/min bei einem Druck von 0,1 bis 1,5 kPa weitergerührt wird. Angaben über die Lagerstabilität und Hautbildungszeiten finden sich in Tabelle 5.

### Beispiel 16

In einem 5 l Planetenmischer (Typ FH6-S der Fa. Drais-Werke GmbH, D-6800 Mannheim) werden 51 Teile des in Beispiel 13 unter A) beschriebenen Polymer I, 30 Teile α,ω-Di(trimethylsiloxy)dimethylpolysiloxan mit einer Viskosität von 100 mPa·s, 6 Teile Hydrogentriethoxysilan, 0,3 Teile 2-Ethylhexansäure, 35 Teile Dolomit (erhältlich unter der Bezeichnung Microdol S bei Norwegian Talc Minerals A.S., N-5355 Knarrevik) und 12 Teile pyrogene Kieselsäure (erhältlich als H 15 von der Wacker-Chemie GmbH, D-8000 München) innerhalb von 5 Minuten mit einer Drehzahl von 120 U/min vermischt. Des weiteren wird wie in Beispiel 13 beschrieben verfahren. Angaben über die Lagerstabilität und Hautbildungszeiten finden sich in Tabelle 5.

### Beispiel 17

Die in Beispiel 16 beschriebene Verfahrensweise wird wiederholt mit der Abänderung, daß das Vermischen der Bestandteile anstelle von 5 Minuten mit einer Drehzahl von 120 U/min 10 Minuten mit einer Drehzahl von 160 U/min bei einer Temperatur von 45°C und einem Druck von 0,1 bis 1,5 kPa durchgeführt wird. Angaben über die Lagerstabilität und Hautbildungszeiten finden sich in Tabelle 5.

### Beispiel 18

Die in Beispiel 16 beschriebene Verfahrensweise wird wiederholt mit der Abänderung, daß das Vermischen der Bestandteile anstelle von 5 Minuten mit einer Drehzahl von 120 U/min 35 Minuten mit einer Drehzahl von 160 U/min bei einer Temperatur von 45°C durchgeführt wird, wobei im Anschluß daran die Mischung weitere 10 Minuten mit einer Drehzahl von 160 U/min bei einem Druck von 0,1 bis 1,5 kPa weitergerührt wird. Angaben über die Lagerstabilität und Hautbildungszeiten finden sich in Tabelle 5.

**Tabelle 5**

| Beispiel | t₁ [min] | | t₂ [d] |
|---|---|---|---|
| | 1 d | 30 d | |
| 13²⁾ | - | - | - |
| 14 | 4 | - | 1 |
| 15 | 6 | 7 | -³⁾ |
| 16 | - | - | 1 |
| 17 | 9 | - | 5-7 |
| 18 | 8 | 10 | -⁴⁾ |
| t₁: Hautbildungszeit nach einem Tag bzw. 30 Tagen Lagerung bei 50°C. t₂: Zeitpunkt nach der Herstellung, an dem Wasserstoffentwicklung zu beobachten ist. | | | |

| | | | |
|---|---|---|---|
| ²⁾ Masse verstrammt innerhalb eines Tages. | | | |
| ³⁾ In einem Beobachtungszeitraum von 150 Tagen ist keine Wasserstoffentwicklung zu beobachten. | | | |
| ⁴⁾ In einem Beobachtungszeitraum von 30 Tagen ist keine Wasserstoffentwicklung zu beobachten. | | | |

### Beispiel 19

α,ω-Dihydroxydimethylpolysiloxan mit einer Viskosität von etwa 20 000 mPa·s wird mit 3 % Hydrogentriethoxysilan, bezogen auf das Gewicht an eingesetztem α,ω-Dihydroxydimethylpolysiloxan, 1 h bei 80°C erhitzt. Dann wird bei einer Temperatur zwischen 85 und 100°C am Rotationsverdampfer bei einem Druck von 1,0 kPa gut ausgeheizt. Nach Entfernen von überschüssigem Silan und Spaltprodukten werden erneut 5 % Hydrogentriethoxysilan, bezogen auf das Gewicht an eingesetztem α,ω-Dihydroxydimethylpolysiloxan, zugesetzt.

Die so erhaltene Silan-Siloxan-Mischung wird nun jeweils mit den in Tabelle 6 angegebenen Zusätzen versetzt.

Ein Teil der jeweils daraus resultierenden Massen wird der Luftfeuchtigkeit ausgesetzt. Die Zeiten zur Ausbildung einer trockenen Oberfläche (Hautbildungszeit) finden sich in Tabelle 6. Ein anderer Teil dieser Massen wird unter Feuchtigkeitsausschluß in Tuben abgefüllt und bei einer Temperatur von 50°C gelagert. Angaben über die Lagerstabilität finden sich in Tabelle 6.

**Tabelle 6**

| Beispiel | Zusatz in %⁵⁾ | t₁ | t₂ [d] |
|---|---|---|---|
| 19a | - | 8 - 24 h | -⁷⁾ |
| 19b | 1 % 2-Ethylhexansäure | 35 min | 30 |
| 19c | 0,5 % Aceton | 3 - 5 d | -⁸⁾ |
| 19d | 0,5 % Ölsäure | 20 min | -⁸⁾ |
| 19e | 0,5 % Zimtsäure | 50 min | -⁸⁾ |
| 19f | 0,15 % Sulfanilsäure | 2 d | -⁸⁾ |
| 19g | 0,5 % Sulfanilsäure | 4 - 20 h | -⁸⁾ |
| 19h | 0,1 % Di-n-butylzinndiacetat | -⁶⁾ | 1 |
| 19i | 0,1 % Triethylamin | 5 - 24 h | 4 |
| 19k | 0,1 % Diethylamin | 5 - 24 h | 3 |
| 19l | 0,1 % Triisononylamin | 5 - 24 h | 14 |
| 19m | 0,5 % Essigsäure | 50 min | -⁹⁾ |
| 19n | 0,5 % Essigsäureanhydrid | 1 - 3 d | -⁹⁾ |
| 19o | 0,5 % N-Methylacetamid | 3 - 7 d | 22 |
| t₁: Hautbildungszeit t₂: Zeitpunkt nach der Herstellung, an dem Wasserstoffentwicklung zu beobachten ist. | | | |

| | | | |
|---|---|---|---|
| 5) bezogen auf das Gewicht an eingesetztem α,ω-Dihydroxydimethylpolysiloxan. | | | |
| 6) Tube zerplatzt innerhalb eines Tages. | | | |
| 7) In einem Beobachtungszeitraum von 74 Tagen ist keine Wasserstoffentwicklung zu beobachten. | | | |
| 8) In einem Beobachtungszeitraum von 55 Tagen ist keine Wasserstoffentwicklung zu beobachten. | | | |
| 9) In einem Beobachtungszeitraum von 61 Tagen ist keine Wasserstoffentwicklung zu beobachten. | | | |

### Beispiel 20

In einem 5 l Planetenmischer (Typ FH6-S der Fa. Drais-Werke, D-6800 Mannheim) werden 51 Teile des in Beispiel 13 unter A) beschriebenen Polymer I, 30 Teile α,ω-Di(trimethylsiloxy)dimethylpolysiloxan mit einer Viskosität von 100 mPa·s, 6 Teile Hydrogentriethoxysilan, 0,60 Teile Ölsäure, 35 Teile Dolomit (erhältlich unter der Bezeichnung Microdol S bei Norwegian Talc Minerals A.S., N-5355 Knarrevik), 12 Teile pyrogene Kieselsäure (erhältlich als H 15 von der Wacker-Chemie GmbH, D-8000 München) sowie jeweils 1,35 Teile der in Tabelle 7 angegebenen Substanz innerhalb von 35 Minuten mit einer Drehzahl von 160 U/min bei einer Temperatur von 45 bis 50 °C vermischt, wobei im Anschluß daran die Mischung weitere 10 Minuten mit einer Drehzahl von 160 U/min bei einem Druck von 1 bis 2 kPa gerührt wird. Mit den so erhaltenen Massen wird wie in Beispiel 13 beschrieben verfahren. Angaben über die Lagerstabilität und Hautbildungszeiten finden sich in Tabelle 7.

**Tabelle 7**

| Beispiel | Zusatz | t₁ [min] | | |
|---|---|---|---|---|
| | | 1 d | 30 d | |
| 20a | - | 17 | 17 | - |
| 20b | 3-Triethoxysilylpropylbernsteinsäureanhydrid¹⁰⁾ | 5 | 4 | - |
| 20c | Triacetoxymethylsilan | 7 | 6 | - |
| 20d | Essigsäureanhydrid | 23 | 20 | - |
| 20e | Di(N-methylacetamido)dimethylsilan¹¹⁾ | 28 | 36 | + |
| - keine Wasserstoffentwicklung innerhalb von 30 Tagen nach der Herstellung. + Wasserstoffentwicklung innerhalb von 30 Tagen nach der Herstellung. t₁: Hautbildungszeit nach einem Tag bzw. 30 Tagen Lagerung bei 50°C. | | | | |

| | | | | |
|---|---|---|---|---|
| 10) käuflich erhältlich bei der Wacker-Chemie GmbH unter der Bezeichnung GF 20. | | | | |
| 11) Hergestellt durch Umsetzung von Dichlordimethylsilan mit dem Natriumsalz des N-Methylacetamids gemäß US-PS 3,766,127 (Dow Corning Corp.). | | | | |

### Beispiel 21

In einem 5 l Planetenmischer (Typ FH6-S der Fa. Drais-Werke, D-6800 Mannheim) werden 51 Teile des in Beispiel 13 unter A) beschriebenen Polymer I, 30 Teile α,ω-Di(trimethylsiloxy)dimethylpolysiloxan mit einer Viskosität von 100 mPa·s, 6,00 Teile Hydrogentriethoxysilan, 0,60 Teile Ölsäure, 35 Teile Dolomit (erhältlich unter der Bezeichnung Microdol S bei Norwegian Talc Minerals A.S., N-5355 Knarrevik) und 12 Teile pyrogene Kieselsäure (erhältlich als H 15 von der Wacker-Chemie GmbH, D-8000 München) innerhalb von 35 Minuten mit einer Drehzahl von 160 U/min bei einer Temperatur von 45 bis 50 °C vermischt, wobei im Anschluß daran die Mischung weitere 10 Minuten mit einer Drehzahl von 160 U/min bei einem Druck von 1 bis 2 kPa gerührt wird. Die so erhaltene Masse wird unter Feuchtigkeitsausschluß in Tuben abgefüllt und bei einer Temperatur von 50°C gelagert. Innerhalb von 30 Tagen nach der Herstellung ist keine Wasserstoffentwicklung zu beobachten.

Aus der so erhaltenen Masse werden jeweils nach einem Tag bzw. 30 Tagen Lagerung 2 mm dicke Filme erzeugt, indem die Masse jeweils mit einer Spachtel auf eine Oberfläche aus Polytetrafluorethylen aufgetragen und der Luftfeuchtigkeit ausgesetzt wird. Zwei Wochen nach dem Auftragen werden die entstandenen trockenen Filme auf ihre mechanischen Eigenschaften hin untersucht. Angaben über die mechanischen Eigenschaften finden sich in Tabelle 8.

Hautbildungszeit [min] nach einer Lagerung von
1 d: 17
30 d: 17

### Beispiel 22

Nach der in Beispiel 21 beschriebenen Verfahrensweise wird aus 52 Teilen des in Beispiel 13 unter A) beschriebenen Polymer I, 30 Teilen α,ω-Di(trimethylsiloxy)dimethylpolysiloxan mit einer Viskosität von 100 mPa·s, 5,20 Teilen Hydrogentriethoxysilan, 0,50 Teilen Ölsäure und 13,5 Teilen pyrogener Kieselsäure (erhältlich als H 15 von der Wacker-Chemie GmbH, D-8000 München) eine Masse hergestellt. Des weiteren wird wie in Beispiel 21 beschrieben verfahren. Angaben über die mechanischen Eigenschaften finden sich in Tabelle 8.

Hautbildungszeit [min] nach einer Lagerung von
1 d: 9
30 d: 15

### Beispiel 23

Nach der in Beispiel 21 beschriebenen Verfahrensweise wird aus 52 Teilen des in Beispiel 13 unter A) beschriebenen Polymer I, 30 Teilen α,ω-Di(trimethylsiloxy)dimethylpolysiloxan mit einer Viskosität von 100 mPa·s, 5,20 Teilen Hydrogendiethoxymethylsilan, 0,40 Teilen Ölsäure und 12,0 Teilen pyrogener Kieselsäure (erhältlich als H 15 von der Wacker-Chemie GmbH, D-8000 München) eine Masse hergestellt. Des weiteren wird wie in Beispiel 21 beschrieben verfahren. Angaben über die mechanischen Eigenschaften finden sich in Tabelle 8.

Hautbildungszeit [min] nach einer Lagerung von
1 d: 45
30 d: 40

### Beispiel 24

### A) Herstellung von α,ω-Di(ethoxymethylhydrogen)dimethylpolysiloxan (Polymer II)

An einem Rotationsverdampfer werden 500 g eines α,ω-Dihydroxydimethylpolysiloxans mit einer Viskosität von etwa 80 000 mPa·s und durchschnittlich 900 bis 1 000 Dimethylsiloxyeinheiten mit 40 g Hydrogendiethoxymethylsilan und 2,5 g 2-Ethylhexansäure 4 Stunden unter Stickstoff auf 80°C erhitzt. Dann wird bei einem Druck von 0,1 bis 1,5 kPa überschüssiges Silan abdestilliert. Im ²⁹Si-NMR-Spektrum ist zu erkennen, daß die Endblockierung der Silanolgruppen quantitativ abgelaufen ist.

Nach der in Beispiel 21 beschriebenen Verfahrensweise wird aus 52 Teilen Polymer II, 30 Teilen α,ω-Di(trimethylsiloxy)dimethylpolysiloxan mit einer Viskosität von etwa 100 mPa·s, 5,20 Teilen Hydrogentriethoxysilan, 12,0 Teilen pyrogener Kieselsäure (erhältlich als HDK H 15 von der Wacker-Chemie GmbH, D-8000 München) sowie 0,4 Teilen Ölsäure eine Masse hergestellt. Des weiteren wird wie in Beispiel 21 beschrieben verfahren. Die entstandenen trockenen Filme haben einen spröden Charakter.

Hautbildungszeit [min] nach einer Lagerung von
1 d: 10
30 d: 8

### Beispiel 25

Die in Beispiel 24 beschriebene Verfahrensweise wird wiederholt mit der Abänderung, daß anstelle von 52 Teilen Polymer II eine Mischung aus 26 Teilen Polymer I und 26 Teilen Polymer II eingesetzt wird. Angaben über die mechanischen Eigenschaften der entstandenen trockenen Filme finden sich in Tabelle 8.

Hautbildungszeit [min] nach einer Lagerung von
1 d: 10
30 d: 11

**Tabelle 8**

| Beispiel | Reißfestigkeit (N/mm²) | Reißdehnung (%) | Modul (N/mm²) | Shore-A -Härte | Weiterreißfestigkeit (N/mm) |
|---|---|---|---|---|---|
| 21a | 1,7 | 320 | 0,7 | 34 | 8,1 |
| 21b | 1,3 | 280 | 0,7 | 31 | 8,1 |
| 22a | 2,9 | 380 | 0,8 | 34 | 8,4 |
| 22b | 2,6 | 330 | 0,8 | 36 | 7,7 |
| 23a | 1,6 | 730 | 0,3 | 13 | 5,9 |
| 23b | 1,5 | 700 | 0,3 | 14 | 6,0 |
| 25a | 0,9 | 310 | 0,4 | 20 | 3,6 |
| 25b | 1,0 | 300 | 0,4 | 19 | 3,5 |
| a: Film aus 1 d gelagerten Masse b: Film aus 30 d gelagerten Masse | | | | | |

### Beispiel 26

a) Komponente A
   58,9 g eines α,ω-Divinyldimethylpolysiloxans mit einer Kettenlänge von etwa 900 Siloxaneinheiten und einer Viskosität von 20 000 mPa·s, 33 g Quarzmehl (käuflich erhältlich unter der Bezeichnung Silbond 600TST bei Quarzwerke GmbH, D-5020 Frechen), 0,005 g H₂PtCl₆·6H₂O im Gemisch mit 0,2 g Isopropanol und 0,25 g 1,3-Divinyltetramethyldisiloxan werden gut vermischt.
b) Komponente B
   50,9 g eines α,ω-Divinyldimethylpolysiloxans mit einer Kettenlänge von etwa 900 Siloxaneinheiten und einer Viskosität von 20 000 mPa·s, 19,3 g silylierte Kieselsäure (käuflich erhältlich unter der Bezeichnung T30 bei der Wacker-Chemie GmbH, D-8000 München), 19,3 g Quarzmehl (käuflich erhältlich unter der Bezeichnung Silbond 600TST bei Quarzwerke GmbH, D-5020 Frechen), 7 g eines Mischpolymerisats aus Trimethylsiloxan-, Dimethylsiloxan- und Methylhydrogensiloxaneinheiten mit einem Molverhältnis von Dimethylsiloxaneinheiten zu Methylhydrogensiloxaneinheiten von 1:1 und einer Viskosität von 60 mPa·s und 0,175 g 1-Ethinylcyclohexanol werden gut vermischt.
c) Herstellung von α,ω-Bis(diethoxyhydrogen)dimethylpolysiloxan (Siloxan C)
   51,8 g α,ω-Dihydroxydimethylpolysiloxan mit durchschnittlich 60 Dimethysiloxyeinheiten, 6,60 g Hydrogentriethoxysilan und 0,58 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 52 g eines klaren, farblosen Öles mit einer Viskosität von 70 mPa·s erhalten, das nach ²⁹Si-NMR-Spektroskopie 100% H-Si-(OEt)₂-Endgruppen aufweist.

Eine Mischung aus 5 g der oben beschriebenen Komponente A und 5 g der oben beschriebenen Komponente B wird mit der in Tabelle 9 angegebenen Menge des oben unter c) beschriebenen Siloxans C versetzt und in einer geschlossenen Form bestehend aus vier Wänden aus Teflon und zwei gegenüberliegenden Wänden aus Aluminium unter den in Tabelle 9 angegebenen Bedingungen temperiert.

**Tabelle 9**

| Beispiel | Siloxan C [g] | Temperatur [°C] | Zeit [h] | Haftung¹²⁾ |
|---|---|---|---|---|
| 26.1 | 0,8 | 80 | 1 | + |
| 26.2 | 0,8 | 40 | 1 | + |
| 26.3 | 0,4 | 80 | 1 | + |
| 26.4 | 0,4 | 40 | 1 | - |
| anschließend | | 23 | 72 | + |

| | | | | |
|---|---|---|---|---|
| 12): + = gute Haftung auf Aluminiumwand = Kohäsionsriß = Riß im Elastomeren - = schlechte Haftung = Adhäsionsriß = Trennung von der Aluminiumwand | | | | |

### Vergleichsbeispiel 2

Eine Mischung aus 5 g der in Beispiel 26 beschriebenen Komponente A und 5 g der in Beispiel 26 beschriebenen Komponente B wird jeweils in einer Schichtdicke von 0,1 bis 0,5 mm auf Glas, Aluminium, Kupfer, Silicium (reinst), Silikonkautschuk (Shore-A-Härte nach DIN 53 505-87 : 45) und Eisen aufgebracht und offen eine Stunde bei 80°C gehärtet. Auf keinem der Substrate wurde eine Haftung erzielt. Das entstandene Elastomer kann jeweils als Folie abgezogen werden.

### Beispiel 27

Die in Vergleichsbeispiel 2 beschriebene Verfahrensweise wird wiederholt mit der Abänderung, daß die Mischung aus Komponente A und B mit 0,8 g des in Beispiel 26 unter c) beschriebenen Siloxans C versetzt wird. Auf allen Substraten wird eine verbesserte Haftung beobachtet, jedoch kann in allen Fällen das entstandene Elastomer als Folie abgezogen werden.

### Beispiel 28

Die in Vergleichsbeispiel 2 beschriebene Arbeitsweise wird wiederholt mit der Abänderung, daß die Mischung der Komponente A und B mit einem Gemisch aus 0,8 g des in Beispiel 26 unter c) beschriebenen Siloxans C und 0,2 g Alginsäure (käuflich erhältlich bei der Janssen-Chimica, D-4054 Nettetal), welche mit 20 % Wasser, bezogen auf das Gewicht der Alginsäure, beladen ist, versetzt wird.

Das entstandene Elastomer haftet auf allen Substraten sehr gut und kann nur noch unter mechanischer Zerstörung von dem jeweiligen Substrat getrennt werden.

### Beispiel 29

Die in Beispiel 28 beschriebene Verfahrensweise wird wiederholt mit der Abänderung, daß anstelle von 0,8 g des in Beispiel 26 unter c) beschriebenen Siloxans C 0,4 g Siloxan C eingesetzt werden.

Das entstandene Elastomer haftet nur auf Glas sehr gut und kann nur unter mechanischer Zerstörung von Glas getrennt werden. Erst nach 48 Stunden Lagerung bei 23°C wird auch auf Aluminium Kohäsionsriß beobachtet.

### Beispiel 30

Die in Beispiel 28 beschriebene Arbeitsweise wird wiederholt mit der Abänderung, daß die Härtung bei 40°C anstelle von 80°C stattfindet.

Die Haftung des entstandenen Elastomers ist auf Glas und Aluminium gut. Auf beiden Substraten wird Kohäsionsriß beobachtet.

### Beispiel 31

Die in Beispiel 28 beschriebene Arbeitsweise wird wiederholt mit der Abänderung, daß 72 Stunden bei 23°C anstelle von einer Stunde bei 80°C temperiert wird und als Substrat nur Glas und Aluminium verwendet wird.

Die Haftung des entstandenen Elastomers ist auf Glas und Aluminium gut. Auf beiden Substraten wird Kohäsionsriß beobachtet.

## Patentansprüche

1. Organo(poly)siloxane mit Organyloxy- und Hydrogengruppen aufweisenden, endständigen Siloxaneinheiten der allgemeinen Formel 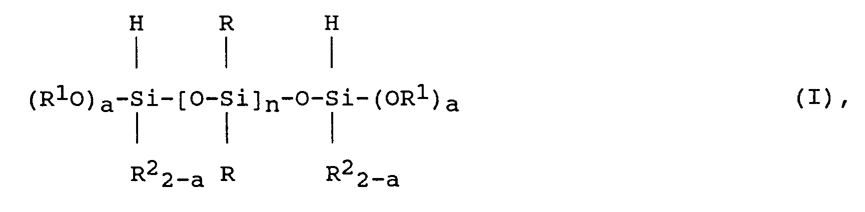 worin
R, R¹ und R² unabhängig voneinander jeweils gleich oder verschieden sein können und einen einwertigen, gegebenenfalls substituierten Kohlenwasserstoffrest mit 1 bis 13 Kohlenstoffatomen bedeutet,
n eine ganze Zahl von mindestens 2 und
a 1 oder 2 ist.

2. Organo(poly)siloxane nach Anspruch 1, dadurch gekennzeichnet, daß n eine ganze Zahl zwischen 10 und 2500 bedeutet.

3. Verfahren zur Herstellung der Organo(poly)siloxane gemäß Anspruch 1 oder 2 durch Umsetzung von α,ω-Dihydroxyorgano(poly)siloxanen der Formel 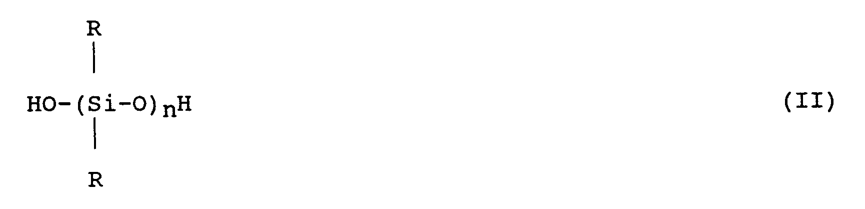 ausschließlich mit Silanen der Formel 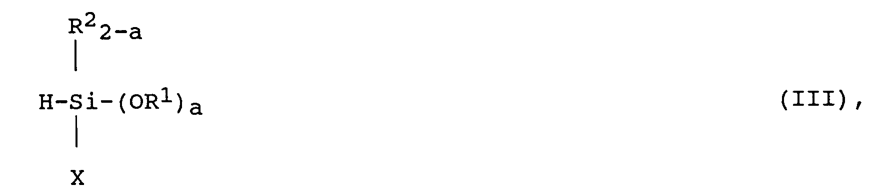 wobei
X eine leicht abspaltbare Gruppe, ausgewählt aus der Gruppe bestehend aus -OR¹, 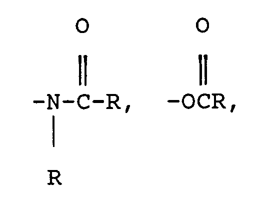 -NR¹R² und
und Chloratom, bedeutet,
R, R¹ und R² unabhängig voneinander jeweils gleich oder verschieden sein können und einen einwertigen, gegebenenfalls substituierten Kohlenwasserstoffrest mit 1 bis 13 Kohlenstoffatomen bedeutet,
n eine ganze Zahl von mindestens 2 und
a 1 oder 2 ist.

4. Verfahren nach Anspruch 3, dadurch gekennzeichnet, daß die Umsetzung von α,ω-Dihydroxyorgano(poly)siloxan gemäß Formel (II) mit Silan der Formel (III) in Anwesenheit von Katalysator durchgeführt wird.

5. Verfahren zur Vernetzung von Organo(poly)siloxan gemäß Anspruch 1 oder 2 oder herstellbar gemäß Anspruch 3 oder 4 durch Zutritt von Feuchtigkeit.

6. Verfahren nach Anspruch 5, dadurch gekennzeichnet, daß die Vernetzung in Anwesenheit von Carbonsäure, ausgewählt aus der Gruppe bestehend aus Hexansäure, 2-Ethylhexansäure, Laurinsäure und Malonsäure, durchgeführt wird.

7. Unter Abspaltung von Alkoholen zu Elastomeren vernetzbare Organo(poly)siloxanmassen, dadurch gekennzeichnet, daß sie mindestens ein Organo(poly)siloxan gemäß Anspruch 1 enthalten.

8. Unter Abspaltung von Alkoholen zu Elastomeren vernetzbare Organo(poly)siloxanmassen gemäß Anspruch 7, dadurch gekennzeichnet, daß sie zusätzlich mindestens ein hydridfunktionelles Organyloxysilan der Formel 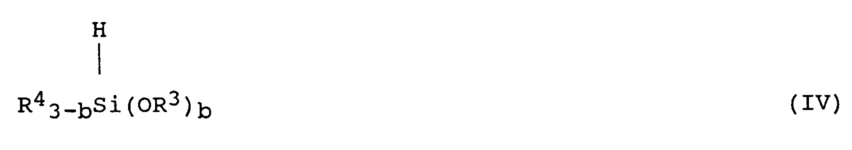 enthalten, wobei
R³ und R⁴ unabhängig voneinander jeweils gleich oder verschieden sein können und einen einwertigen, gegebenenfalls substituierten Kohlenwasserstoffrest
bedeutet und
b 2 oder 3 ist.

9. Unter Abspaltung von Alkoholen zu Elastomeren vernetzbare Organo(poly)siloxanmassen gemäß Anspruch 7 oder 8, dadurch gekennzeichnet, daß sie, jeweils bezogen auf das Gesamtgewicht der vernetzbaren
Organo(poly)siloxanmasse,
(A) 20 bis 80 Gewichtsprozent Organo(poly)siloxan gemäß Anspruch 1,
(B) 0 bis 30 Gewichtsprozent hydridfunktionelles Organyloxysilan,
(C) 0 bis 5 Gewichtsprozent Kondensationskatalysator,
(D) 0 bis 70 Gewichtsprozent Füllstoff,
(E) 0 bis 60 Gewichtsprozent Weichmacher,
(F) 0 bis 20 Gewichtsprozent Haftvermittler,
(G) 0 bis 20 Gewichtsprozent Scavenger sowie
(H) gegebenenfalls weitere Stoffe, wie beispielsweise Farbstoffe, Fungicide und Thixotropiermittel enthalten.

10. Verfahren zur Herstellung von unter Abspaltung von Alkoholen zu Elastomeren vernetzbaren Organo(poly)siloxanmassen gemäß einem oder mehreren der Ansprüche 7 bis 9, dadurch gekennzeichnet, daß alle Bestandteile in beliebiger Reihenfolge miteinander vermischt werden, die Mischung in einer 1. Stufe bei einer Temperatur von 15 bis 80 °C und einem Druck von 900 bis 1 100 hPa für eine Dauer von 20 bis 90 Minuten gerührt wird und anschließend in einer 2. Stufe bei einem Druck von 0,01 bis 100 hPa für eine Dauer von 3 bis 60 Minuten weitergerührt wird, wobei die Rührgeschwindigkeit so gewählt wird, daß sich die Temperatur der Masse während des Rührens ohne weitere Wärmezufuhr auf einen Wert innerhalb des Temperaturbereiches von 15°C bis 80°C erhöht.

11. Verfahren zur Herstellung von Organopolysiloxanelastomeren durch Vernetzung von durch Anlagerung von Si-gebundenem Wasserstoff an SiC-gebundene organische Reste mit aliphatischer Kohlenstoff-Kohlenstoff-Mehrfachbindung vernetzbaren Massen, dadurch gekennzeichnet, daß die vernetzbaren Massen mindestens ein Organo(poly)siloxan gemäß Anspruch 1 enthalten.

12. Verfahren nach Anspruch 11, dadurch gekennzeichnet, daß als vernetzbare Massen solche eingesetzt werden, die abgesehen von Organo(poly)siloxan gemäß Anspruch 1 (a),
(b) SiC-gebundene Reste mit aliphatischer Kohlenstoff-Kohlenstoff-Mehrfachbindung enthaltende Organopolysiloxane,
(c) Verbindungen mit SiC-gebundenem Wasserstoff und
(d) die Anlagerung von Si-gebundenem Wasserstoff an SiC-gebundene Reste mit aliphatischer Kohlenstoff-Kohlenstoff-Mehrfachbindung fördernden Katalysator, ausgewählt aus der Gruppe bestehend aus Metalle der 8. Nebengruppe und deren anorganische und organische Verbindungen,
enthalten, und
Organo(poly)siloxan (a) in Mengen von insgesamt 1 bis 20 Gewichtsprozent, bezogen auf das Gesamtgewicht der Bestandteile (b) und (c) eingesetzt wird.

13. Verfahren nach Anspruch 11 oder 12, dadurch gekennzeichnet, daß die vernetzbaren Massen zusätzlich zu den Bestandteilen (a), (b), (c) und (d) Verbindungen, die bei Temperaturen oberhalb von etwa 23°C physikalisch oder chemisch gebundenes Wasser abgeben (e), enthalten.

## Claims

1. Organo(poly)siloxanes containing terminal siloxane units having organyloxy and hydrogen groups of the general formula 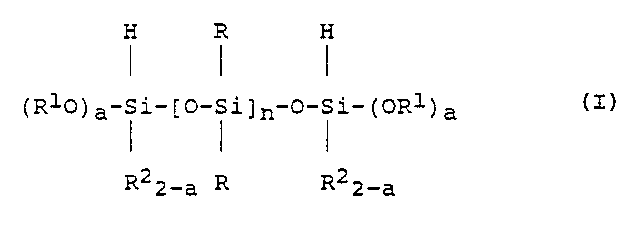 in which
R, R¹ and R², independently of one another, can each be identical or different and denote a monovalent, substituted or unsubstituted hydrocarbon radical with 1 to 13 carbon atoms,
n is an integer of at least 2 and
a is 1 or 2.

2. Organo(poly)siloxanes according to Claim 1, characterized in that n is an integer between 10 and 2500.

3. Process for the preparation of the organo(poly)siloxanes according to Claim 1 or 2 by reacting α,ω-dihydroxyorgano(poly)siloxanes of the formula 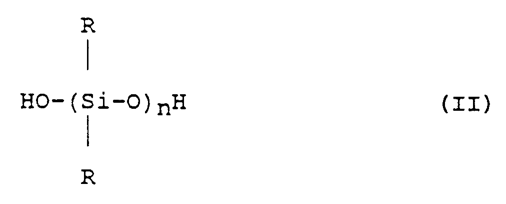 exclusively with silanes of the formula 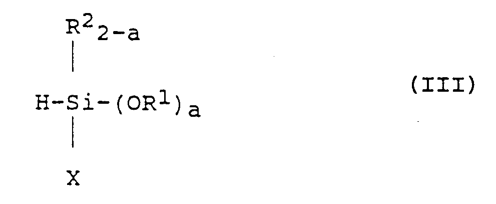 in which
X is an easily detachable group, selected from the group consisting of
-OR¹, 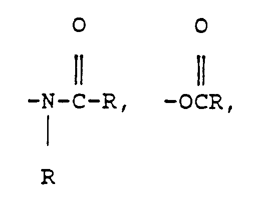 -NR¹R²
and a chlorine atom,
R, R¹, R², independently of one another, can each be identical or different and denote a monovalent, substituted or unsubstituted hydrocarbon radical with 1 to 13 carbon atoms,
n is an integer of at least 2 and
a is 1 or 2.

4. Process according to Claim 3, characterized in that the reaction of α,ω-dihydroxyorgano(poly)siloxane according to formula (II) with silane of the formula (III) is carried out in the presence of a catalyst.

5. Process for the crosslinking of organo(poly)siloxane according to Claim 1 or 2 or preparable according to Claim 3 or 4 by exposure to moisture.

6. Process according to Claim 5, characterized in that the crosslinking is carried out in the presence of a carboxylic acid, selected from the group consisting of hexanoic acid, 2-ethylhexanoic acid, lauric acid and malonic acid.

7. Organo(poly)siloxane compositions which are cross-linkable with the elimination of alcohols to give elastomers, characterized in that they contain at least one organo(poly)siloxane according to Claim 1.

8. Organo(poly)siloxane compositions according to Claim 7 which are crosslinkable with the elimination of alcohols to give elastomers, characterized in that they additionally contain at least one hydridofunctional organyloxysilane of the formula 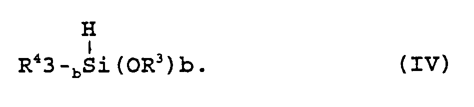 in which R³ and R⁴, independently of one another, can each be identical or different and denote a monovalent, substituted or unsubstituted hydrocarbon radical and b is 2 or 3.

9. Organo(poly)siloxane compositions according to Claim 7 or 8 which are crosslinkable with the elimination of alcohols to give elastomers, characterized in that they contain, in each case relative to the total weight of the crosslinkable organo(poly)siloxane composition,
(A) 20 to 80 per cent by weight of an organo(poly)siloxane according to Claim 1,
(B) 0 to 30 per cent by weight of a hydridofunctional organyloxysilane,
(C) 0 to 5 per cent by weight of a condensation catalyst,
(D) 0 to 70 per cent by weight of filler,
(E) 0 to 60 per cent by weight of plasticizer,
(F) 0 to 20 per cent by weight of adhesion promoter,
(G) 0 to 20 per cent by weight of scavenger and
(H) if desired, further substances, such as, for example, dyes, fungicides and thixotropic agents.

10. Process for the preparation of organo(poly)siloxane compositions according to one or more of Claims 7 to 9 which are crosslinkable with the elimination of alcohols to give elastomers, characterized in that all constituents are mixed with one another in any desired order, the mixture is stirred in a first step at a temperature of 15 to 80°C and a pressure of 900 to 1100 hPa for a period of 20 to 90 minutes and stirring is continued in a second step at a pressure of 0.01 to 100 hPa for a period of 3 to 60 minutes, the stirring rate being selected such that the temperature of the composition increases during the stirring without any further addition of heat to a value within the temperature range of 15°C to 80°C.

11. Process for the preparation of organopolysiloxane elastomers by crosslinking of compositions which are crosslinkable by adduct formation of Si-bound hydrogen with SiC-bound organic radicals having an aliphatic carbon-carbon multiple bond, characterized in that the crosslinkable compositions contain at least one organo(poly)siloxane according to Claim 1.

12. Process according to Claim 11, characterized in that the crosslinkable compositions used are those which, apart from the organo(poly)siloxane according to Claim 1 (a), contain
(b) organopolysiloxanes containing SiC-bound radicals having an aliphatic carbon-carbon multiple bond,
(c) compounds containing SiC-bound hydrogen and
(d) a catalyst promoting the adduct formation of Si-bound hydrogen with SiC-bound radicals having an aliphatic carbon-carbon multiple bond, selected from the group consisting of metals from subgroup VIII and inorganic and organic compounds thereof, and
organo(poly)siloxane (a) is used in amounts of a total of 1 to 20 per cent by weight, relative to the total weight of constituents (b) and (c).

13. Process according to Claim 11 or 12, characterized in that the crosslinkable compositions contain, in addition to constituents (a), (b), (c) and (d), compounds which release physically or chemically bound water (e) at temperatures above about 23°C.

## Revendications

1. Organopolysiloxanes ayant des unités terminales siloxane comportant des groupes organyloxy et hydrogène de formule générale 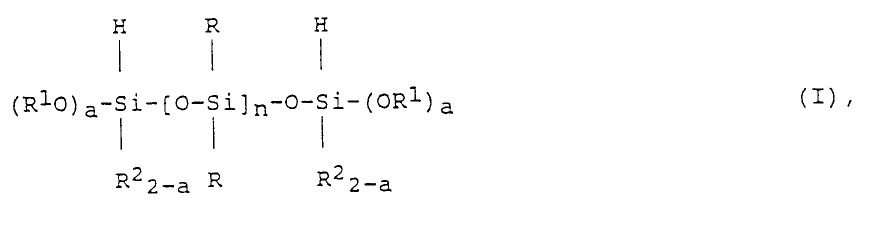 dans laquelle
R, R¹ et R², indépendamment les uns des autres, peuvent être identiques ou différents et représentent un reste hydrocarboné monovalent de 1 à 13 atomes de carbone éventuellement substitué,
n est un nombre entier au moins égal à 2, et
a est 1 ou 2.

2. Organopolysiloxanes selon la revendication 1, caractérisés en ce que n représente un nombre entier compris entre 10 et 2500.

3. Procédé de préparation des organopolysiloxanes selon la revendication 1 ou 2, par réaction d'α,ω-dihydroxyorganopolysiloxanes de formule 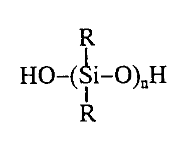 exclusivement avec des silanes de formule 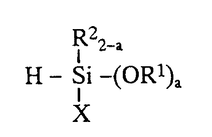 où X représente un groupe facilement séparable choisi dans le groupe constitué par
-OR¹, 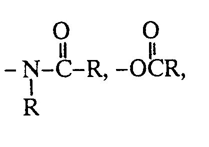 -NR¹R²
et l'atome de chlore,
R, R¹ et R², indépendamment les uns des autres, peuvent être identiques ou différents et représentent un reste hydrocarboné monovalent de 1 à 13 atomes de carbone éventuellement substitué,
n est un nombre entier au moins égal à 2, et
a est 1 ou 2.

4. Procédé selon la revendication 3, caractérisé en ce que la réaction de l'α,ω-dihydroxyorganopolysiloxane de formule (II) avec le silane de formule (III) s'effectue en présence d'un catalyseur.

5. Procédé de réticulation d'un organopolysiloxane selon la revendication 1 ou 2 ou pouvant être préparé selon la revendication 3 ou 4, par introduction d'humidité.

6. Procédé selon la revendication 5, caractérisé en ce que l'on effectue la réticulation en présence d'un acide carboxylique choisi dans le groupe constitué par l'acide hexanoïque, l'acide 2-éthylhexanoïque, l'acide laurique et l'acide malonique.

7. Compositions d'organopolysiloxanes réticulables en élastomères avec élimination d'alcools, caractérisées en ce qu'elles contiennent au moins un organopolysiloxane selon la revendication 1.

8. Compositions d'organopolysiloxanes réticulables en élastomères avec élimination d'alcools selon la revendication 7, caractérisées en ce qu'elles contiennent en outre au moins un organyloxysilane à fonction hydrure de formule 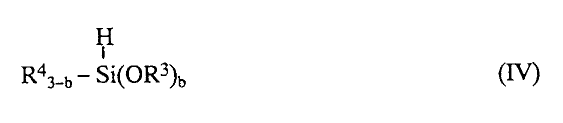 dans laquelle R³ et R⁴, indépendamment l'un de l'autre, peuvent être identiques ou différents et représentent un reste hydrocarboné monovalent éventuellement substitué, et
b est 2 ou 3.

9. Compositions d'organopolysiloxanes réticulables en élastomères avec élimination d'alcools selon la revendication 7 ou 8, caractérisées en ce qu'elles contiennent, toujours par rapport à la masse totale de la composition d'organopolysiloxane réticulable,
(A) 20 à 80 % en masse d'un organopolysiloxane selon la revendication 1,
(B) 0 à 30 % en masse d'un organyloxysilane à fonction hydrure,
(C) 0 à 5 % en masse d'un catalyseur de condensation,
(D) 0 à 70 % en masse d'une charge,
(E) 0 à 60 % en masse d'un plastifiant,
(F) 0 à 20 % en masse d'un agent adhésif,
(G) 0 à 20 % en masse d'un agent épurateur, et
(H) éventuellement d'autres substances telles que, par exemple, des colorants, des fongicides et des agents thixotropes.

10. Procédé de préparation de compositions d'organopolysiloxanes réticulables en élastomères avec élimination d'alcools selon l'une ou plusieurs des revendications 7 à 9, caractérisé en ce que l'on mélange ensemble tous les constituants dans un ordre quelconque, on agite le mélange dans une 1ère étape à une température comprise entre 15 et 80°C et sous une pression comprise entre 900 et 1100 hPa pendant un temps compris entre 20 et 90 minutes, puis on continue à agiter dans une 2ème étape sous une pression comprise entre 0,01 et 100 hPa, pendant un temps compris entre 3 et 60 minutes, en choisissant la vitesse d'agitation de façon que la température de la composition s'élève pendant l'agitation, sans autre apport de chaleur, à une valeur comprise dans l'intervalle de températures de 15 à 80°C.

11. Procédé de préparation d'élastomères organopolysiloxanes par réticulation de compositions réticulables par addition d'hydrogène lié à Si sur des restes organiques liés par des liaisons SiC et contenant une liaison multiple carbone-carbone aliphatique, caractérisé en ce que les compositions réticulables contiennent au moins un organopolysiloxane selon la revendication 1.

12. Procédé selon la revendication 11, caractérisé en ce que l'on utilise comme compositions réticulables des compositions qui contiennent, en-dehors de l'organopolysiloxane (a) selon la revendication 1,
(b) des organopolysiloxanes contenant des restes liés par des liaisons SiC ayant une liaison multiple carbone-carbone aliphatique,
(c) des composés contenant de l'hydrogène lié à Si, et
(d) un catalyseur accélérant l'addition de l'hydrogène lié à Si sur les restes liés par des liaisons SiC ayant une liaison multiple carbone-carbone aliphatique, choisi dans le groupe constitué par les métaux du 8ème groupe secondaire et leurs composés organiques ou inorganiques, et
on utilise l'organopolysiloxane (a) en des quantités globales de 1 à 20 % en masse par rapport à la masse totale des constituants (b) et (c).

13. Procédé selon la revendication 11 ou 12, caractérisé en ce que les compositions réticulables contiennent en plus des constituants (a), (b), (c) et (d) des composés (e) qui cèdent de l'eau physiquement ou chimiquement liée à des températures supérieures à environ 23°C.
